(19)

Europäisches
Patentamt
European
Patent Office
Office européen
des brevets

(11) **EP 4 258 132 A1**

(12) **EUROPEAN PATENT APPLICATION**
published in accordance with Art. 153(4) EPC

(43) Date of publication:
**11.10.2023 Bulletin 2023/41**

(21) Application number: **21914219.7**

(22) Date of filing: **27.12.2021**

(51) International Patent Classification (IPC):
***G06F 16/9535*** (2019.01)  ***G06N 3/04*** (2023.01)

(52) Cooperative Patent Classification (CPC):
**G06F 16/36; G06F 16/9535; G06N 3/04; G06N 3/08**

(86) International application number:
**PCT/CN2021/141472**

(87) International publication number:
**WO 2022/143482 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2020 CN 202011640574**

(71) Applicant: **Huawei Technologies Co., Ltd.
Shenzhen, Guangdong 518129 (CN)**

(72) Inventors:
• **WANG, Shendi**
  **Shenzhen, Guangdong 518129 (CN)**
• **LI, Haoyang**
  **Shenzhen, Guangdong 518129 (CN)**
• **WANG, Yunpeng**
  **Shenzhen, Guangdong 518129 (CN)**
• **CAO, Chen**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **RECOMMENDATION METHOD, RECOMMENDATION NETWORK, AND RELATED DEVICE**

(57) Embodiments of this application disclose a recommendation method. The method in embodiments of this application is applied to a scenario in which an item is recommended to a user, for example, movie recommendation or game recommendation. The method in embodiments of this application includes: obtaining a knowledge graph, where the knowledge graph includes a plurality of first entities indicating an item and a plurality of second entities indicating an item attribute; and running, based on the knowledge graph and information of the user, a neural network to obtain a recommendation result. The neural network is configured to perform computing based on at least one first direction and at least one second direction in the knowledge graph to obtain the recommendation result. Therefore, the new recommendation method is provided, so that the more accurate recommendation result can be obtained.

FIG. 9

**Description**

This application claims priority to Chinese Patent Application No. CN202011640574.7, filed with the China National Intellectual Property Administration on December 31, 2020 and entitled "RECOMMENDATION METHOD, RECOMMENDATION NETWORK, AND RELATED DEVICE", which is incorporated herein by reference in its entirety.

**TECHNICAL FIELD**

This application relates to the field of artificial intelligence, and in particular, to a recommendation method, a recommendation network, and a related device.

**BACKGROUND**

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result by using the knowledge. In other words, artificial intelligence is a branch of computer science, and is intended to understand essence of intelligence and produce a new intelligent machine that can react in a manner similar to human intelligence. Artificial intelligence is to study design principles and implementation methods of various intelligent machines, so that the machines have perception, inference, and decision-making functions.

With development of internet information technologies, especially rise of E-commerce, internet content enjoys an explosive growth and an era of massive data is gradually entered. Users are at a loss when facing a wide variety of goods, movies, music, videos and other items. This is often mentioned as information overload.

Therefore, how to accurately recommend an appropriate item to a user in a large quantity of items is a technical problem that urgently needs to be resolved.

**SUMMARY**

Embodiments of this application provide a recommendation method, a recommendation network, and a related device. A neural network may be run based on a knowledge graph and information of a user, to obtain a recommendation result. The neural network is used to perform computing based on at least one first direction and at least one second direction in the knowledge graph to obtain the recommendation result. Therefore, the new recommendation method is provided so that a more accurate recommendation result can be obtained, that is, precision and/or a recall of the recommendation result can be improved. The new recommendation method is provided may be applied to a scenario in which an item is recommended to the user, for example, movie recommendation or game recommendation.

According to a first aspect of embodiments of this application, a recommendation method is provided. The method may be performed by a recommendation apparatus, or may be performed by a component (such as a processor, a chip, or a chip system) of the recommendation apparatus. The method includes: obtaining a knowledge graph, where the knowledge graph includes a plurality of first entities indicating items and a plurality of second entities indicating item attributes; and running, based on the knowledge graph and information of a user, a neural network to obtain a recommendation result, where the information of the user indicates an item or an item attribute in a history record of the user. The recommendation result includes a recommended item. The neural network is used to perform computing based on at least one first direction and at least one second direction in the knowledge graph to obtain the recommendation result. The first direction starts from a first entity indicating the recommended item or a to-be-recommended item. The second direction starts from a first entity indicating the item in the history record of the user, or the second direction starts from a second entity indicating the item attribute in the history record of the user. The information of the user may include a user identifier, an item clicked by the user or an item attribute, and an attribute related to the user, for example, an age, an occupation, or a gender of the user. The to-be-recommended item may be understood as an item that is not clicked by the user. The recommendation method is to find the recommended item appropriate for the user from the to-be-recommended item, to improve precision and a recall. It may be understood that, in the knowledge graph, all first entities that do not indicate the item in the history record of the user may be the to-be-recommended items. Certainly, in some implementations, preliminary filtering may be performed to narrow down a range of the to-be-recommended items in the knowledge graph, so that some items indicated by the first entity are selected as the to-be-recommended items. The information of the user may indicate an item or an item attribute in a positive event in the history record of the user. It should be understood that the information of the user may be filtered. The information of the user for recommendation indicates the item or the item attribute in the positive event in the history record of the user. The item or the item attribute in the positive event in the history record of the user may be understood as an item or an item attribute once in the positive event of the user that is indicated by the first entity or the second entity. The positive event is an event in which the user does not clearly express a rejective or negative intention (that is, dislike, unconcern, or being unwilling to follow), or expresses a positive intention such as following, like, or interest. For example, that the user clicks, forwards, follows, comments, incentives (such as puts a coin and likes), favorites, browses, and browses an item or an item attribute for more than a threshold time all are positive events; and that the user clicks "Dislike", clicks "Do not show me again", clicks "Not interested", and selects "Do not recommend this on my homepage" all are negative events, and an item or an item attribute related to such history record should be removed and not entered. In addition, the first direction starts from the first entity indicating the recommended item or the to-be-recommended item. It may be understood that a start point of the first direction is the first entity indicating the recommended item or the to-be-recommended item. An entity to which the first direction points is not limited. The second direction starts from the first entity indicating the recommended item or the to-be-recommended item, or the first direction starts from the second entity indicating the item attribute in the history record of the user. It may be understood that a start point of the second direction is the first entity indicating the recommended item or the to-be-recommended item, or a start point of the second direction is the second entity. An entity to which the second direction points is not limited. For example, in a movie recommendation scenario, the start point of the first direction is a movie that is not watched by the user, and the start point of the second direction is a movie that is watched by the user or a corresponding movie genre, or the like.

In this embodiment of this application, the neural network can be run based on the knowledge graph and the information of the user, to obtain the recommendation result. The neural network is configured to perform computing based on the at least one first direction and the at least one second direction in the knowledge graph to obtain the recommendation result. Therefore, the new recommendation method is provided, so that the more accurate recommendation result can be obtained, that is, precision and/or a recall of the recommendation result can be improved.

Optionally, in a possible implementation of the first aspect, the recommendation result in the foregoing step further includes an explanation for the recommended item, and the explanation is associated with one first direction and one second direction.

In such possible implementation, in one aspect, the explanation for the recommended item can be obtained based on the first direction and the second direction. Because the explanation is related to the two directions, reasonableness of the explanation can be improved. In another aspect, in the recommendation method, in addition to the recommended item, the explanation for the recommended item can also be obtained. The explanation can express a reason why the recommended item is recommended.

Optionally, in a possible implementation of the first aspect, the foregoing step of running, based on the knowledge graph and information of a user, a neural network to obtain a recommendation result includes: extracting, based on the knowledge graph and the information of the user, a plurality of paths from the knowledge graph, where each path indicates an association between entities at two ends of the path, one end of each path corresponds to the to-be-recommended item, and the other end of each path corresponds to the item or the item attribute in the history record of the user; and inputting the plurality of paths into the neural network to score a plurality of to-be-recommended items, so that the neural network obtains the recommendation result, where the neural network is configured to perform computing based on a first direction and a second direction of each of the plurality of paths to obtain the recommendation result; and for one path, the first direction is a direction in which one end of the path points to the other end of the path, and the second direction is a direction in which the other end of the path points to one end of the path.

In this possible implementation, the plurality of paths are used for scoring the plurality of to-be-recommended items, and the neural network is configured to perform computing based on the first direction and the second direction of each of the plurality of paths to obtain the recommendation result, so that the two directions of the path are considered during scoring. In this way, the recommendation result is more accurate compared with a recommendation result obtained in one direction in the conventional technology. In actual application, each of the plurality of to-be-recommended items is computed based on the first direction and the second direction of each of the plurality of paths, to obtain the plurality of recommended items, and then the final recommendation result is obtained based on ranking of the recommended item. In this way, several recommended items can be preset, so that the more accurate recommended item can be provided.

Optionally, in a possible implementation of the first aspect, the foregoing step of running, based on the knowledge graph and information of a user, a neural network to obtain a recommendation result includes: inputting the knowledge graph and the information of the user into the neural network; extracting, by the neural network based on the knowledge graph and the information of the user, a plurality of paths from the knowledge graph, where each path indicates an association between entities at two ends of the path, one end of each path corresponds to the to-be-recommended item, and the other end of each path corresponds to the item or the item attribute in the history record of the user; and scoring, based on a first direction and a second direction of each of the plurality of paths, a plurality of to-be-recommended items, so that the neural network obtains the recommendation result, where for one path, the first direction is a direction in which one end of the path points to the other end of the path, and the second direction is a direction in which the other end of the path points to one end of the path.

In this possible implementation, the plurality of to-be-recommended items can be scored in the first direction and the second direction of each of the plurality of paths, so that the two directions of the path are considered during scoring. In this way, the recommendation result is more accurate compared with a recommendation result obtained in one direction in the conventional technology. In actual application, each of the plurality of to-be-recommended items is scored based on the first direction and the second direction of each of the plurality of paths, to obtain the plurality of recommended items, and then the final recommendation result is obtained based on ranking of the recommended item. In this way, several recommended items can be preset, so that the more accurate recommended item can be provided.

Optionally, in a possible implementation of the first aspect, the first direction is consistent with a direction of a first vector; the second direction is consistent with a direction of a second vector; and for one path, the first vector is a vector pointing from the first entity that is in the path and that indicates the to-be-recommended item to an entity that is in the path and that is adjacent to the first entity indicating the to-be-recommended item, and the second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user. The scoring, based on the first direction and the second direction of each of the plurality of paths, a plurality of to-be-recommended items corresponding to the plurality of paths, so that the neural network obtains the recommendation result includes: for each of the plurality of paths, scoring, based on a probability that the first vector and the second vector of each path are aggregated at one entity in each path, the to-be-recommended item corresponding to each path, to obtain the recommended item.

In this possible implementation, an overlap probability of information in left and right flow directions in the path in embedding space is computed, and an overlap probability feature of an aggregation node is computed. The overlap probability feature is used for outputting a semantic-level explanation, that is, a preference degree of the user for an entity node. In actual application, for the plurality of to-be-recommended items, the to-be-recommended item corresponding to each path is scored based on the probability that the first vector and the second vector of each path are aggregated at one entity in each path, to obtain the plurality of recommended items, and then the final recommendation result is obtained based on the ranking of the recommended item. In this way, the recommended item appropriate for the user is arranged in the front, and an interest point of the user can be accurately found.

Optionally, in a possible implementation of the first aspect, the foregoing step further includes: separately scoring, based on the first direction and the second direction of each of the plurality of paths, the plurality of paths, to obtain an explanation for the recommendation result, where the explanation is a description of associations between entities at two ends indicated by the one or more paths in the obtained recommendation result.

In this possible implementation, the plurality of paths can be scored in the first direction and the second direction of each of the plurality of paths, so that the two directions of the path are considered during scoring. In this way, the recommendation result is more accurate compared with a recommendation result obtained in one direction in the conventional technology. In actual application, each of the plurality of paths is scored based on the first direction and the second direction of each of the plurality of paths, to obtain a plurality of explanations, and then the final recommendation result is obtained based on ranking of the explanation. In this way, the several recommended items can be preset, so that the more accurate recommended item can be provided.

Optionally, in a possible implementation of the first aspect, the first direction of the foregoing is consistent with the direction of the first vector; the second direction of the foregoing step is consistent with the direction of the second vector; and for one path, the first vector is the vector pointing from the first entity that is in the path and that indicates the to-be-recommended item to the entity that is in the path and that is adjacent to the first entity indicating the to-be-recommended item, and the second vector is the vector pointing from the first entity that is in the path and that indicates the item in the history record of the user to the entity that is in the path and that is adjacent to the first entity indicating the item in the history record of the user; or the second vector is the vector pointing from the second entity that is in the path and that indicates the item attribute in the history record of the user to the entity that is in the path and that is adjacent to the second entity indicating the item attribute in the history record of the user. The scoring, based on the first direction and the second direction of each of the plurality of paths, the plurality of paths, to obtain an explanation for the recommendation result includes: separately computing a probability that the first vector and the second vector of each path are aggregated at one entity included in each path, to obtain the explanation for the recommendation result.

In this possible implementation, the overlap probability of the information in the left and right flow directions in the path in the embedding space is computed, and the overlap probability feature of the aggregation node is computed. The overlap probability feature is used for outputting the semantic-level explanation, that is, the preference degree of the user for the entity node. That is, the probability that vectors in the two flow directions are aggregated is computed. This helps find an interest point of the user more accurately and give an appropriate recommendation.

Optionally, in a possible implementation of the first aspect, the foregoing step of separately computing, a probability that the first vector and the second vector of each path are aggregated at one entity included in each path includes:

$$p_m = \frac{\exp\left(s_m^{left} s_m^{right}\right)}{\sum_{m=1}^{M} \exp\left(s_m^{left} s_m^{right}\right)},$$

where

$p_m$ represents the probability; $s_m^{left}$ represents the first vector, and $s_m^{right}$ represents the second vector; or $s_m^{right}$ represents the first vector, and $s_m^{left}$ represents the second vector; exp represents an exponential function based on e; and M is a positive integer and M represents a quantity of paths between the to-be-recommended item and items or item attributes in the history record of the user.

Optionally, in a possible implementation of the first aspect, the neural network in the foregoing step is obtained by training the neural network by using a training sample as an input of the neural network and a loss function value less than a threshold as an objective. The training sample includes a plurality of training paths, or the training sample includes the knowledge graph for training and the item and/or the item attribute in the history record of the user for training. Each training path indicates the association between entities at the two ends of the training path. The two ends of each training path correspond to the item or the item attribute in the history record of the user. The loss function includes a first loss function. The first loss function indicates a difference between the recommendation result output by the neural network and a target result. The target result is related to the item or the item attribute in the history record of the user.

In this possible implementation, the neural network is trained by using the first loss function, so that the recommendation result is more accurate and meets the preference degree of the user.

Optionally, in a possible implementation of the first aspect, the loss function in the foregoing step further includes a second loss function. The second loss function indicates a difference between an embedding vector of a first training vector and an embedding vector of a second training vector in the training path of the knowledge graph for training. Two ends of the training path correspond to the item or the item attribute in the history record of the user.

In this possible implementation, a purpose of the second loss function is to minimize a computing error of the vectors in the left and right flow directions in the path that flow to a same node, so that in a relation matrix with a higher dimension in the embedding space, a computed embedding vector in the left is equal to a computed embedding vector in the right as much as possible. That is, the second loss function can be used to minimize an error that the two ends of the path flow to the same node, to resolve a problem that the two ends of the path flow to the same node in a complex relation.

Optionally, in a possible implementation of the first aspect, the loss function in the foregoing step further includes a third loss function. The third loss function indicates a difference between a computed embedding vector of the first entity and a real embedding vector of the first entity, and/or the third loss function indicates a difference between a computed embedding vector of the second entity and a real embedding vector of the second entity.

In this possible implementation, the third loss function can minimize an error of a head node vector and a tail node vector that are of a triplet mapping to a relational space, to resolve a problem that one-to-many or many-to-one mapping occurs in a single triplet in the complex relation.

According to a second aspect of embodiments of this application, a recommendation method is provided. The method may be performed by a recommendation apparatus, or may be performed by a component (such as a processor, a chip, or a chip system) of the recommendation apparatus. The method includes: obtaining a knowledge graph, a first identifier, and a second identifier, where the knowledge graph includes a plurality of first entities indicating an item and a plurality of second entities indicating an item attribute, the first identifier indicates a to-be-recommended item, the second identifier indicates an item or an item attribute in a history record of a user, and the knowledge graph includes a first entity corresponding to the first identifier and a first entity or a second entity corresponding to the second identifier; and running, based on the knowledge graph, the first identifier, and the second identifier, a neural network, to obtain an evaluation result, where the evaluation result includes a probability that the to-be-recommended item is recommended; the neural network is configured to perform computing based on at least one first direction and at least one second direction in the knowledge graph, to obtain the evaluation result. The first direction starts from the first entity corresponding to the first identifier. The second direction starts from the first entity or the second entity corresponding to the second identifier.

In this embodiment of this application, the neural network can be run based on the knowledge graph, the first identifier, and the second identifier, to obtain the probability that the to-be-recommended item is recommended. The neural network is configured to perform computing based on the at least one first direction and the at least one second direction in the knowledge graph, to obtain the probability that the to-be-recommended item is recommended. Therefore, the new recommendation method is recommended. In actual application, each of the plurality of to-be-recommended items is computed based on the at least one first direction and the at least second direction of the knowledge graph, to obtain a plurality of probabilities, and then a final evaluation result is obtained based on ranking of the probability. In this way, the several recommended items can be preset, so that the more accurate recommended item can be provided.

Optionally, in a possible implementation of the second aspect, the evaluation result in the foregoing step further includes a probability corresponding to a path in the knowledge graph based when the to-be-recommended item is recommended, one end of the path is the first entity corresponding to the first identifier, and the other end of the path is the first entity corresponding to the second identifier.

Optionally, in a possible implementation of the second aspect, the foregoing step of running, based on the knowledge graph, the first identifier, and the second identifier, a neural network, to obtain an evaluation result includes: extracting, based on the knowledge graph, the first identifier, and the second identifier, a plurality of paths from the knowledge graph, where each path indicates an association between entities at two ends of the path, one end of each path corresponds to the to-be-recommended item, and the other end of each path corresponds to the item or the item attribute in the history record of the user; and inputting the plurality of paths into the neural network to score a plurality of to-be-recommended items, so that the neural network obtains the evaluation result, where the neural network is configured to perform computing based on a first direction and a second direction of each of the plurality of paths to obtain the probability. For one path, the first direction is a direction in which one end of the path points to the other end of the path, and the second direction is a direction in which the other end of the path points to one end of the path.

In this possible implementation, the plurality of to-be-recommended items can be scored by inputting the plurality of paths into the neural network, so that the neural network obtains the evaluation result. In this way, the two directions of the path are considered during scoring. The evaluation result is more accurate compared with an evaluation result obtained in one direction in the conventional technology.

Optionally, in a possible implementation of the second aspect, the foregoing step of running, based on the knowledge graph, the first identifier, and the second identifier, a neural network, to obtain an evaluation result includes: inputting the knowledge graph, the first identifier, and the second identifier into the neural network; and extracting, by the neural network based on the knowledge graph, the first identifier, and the second identifier, a plurality of paths from the knowledge graph, where each path indicates an association between entities at two ends of the path, one end of each path corresponds to the to-be-recommended item, and the other end of each path corresponds to the item or the item attribute in the history record of the user; and scoring, based on the first direction and the second direction of each of the plurality of paths, a plurality of to-be-recommended items corresponding to the plurality of paths, so that the neural network obtains the evaluation result. For one path, the first direction is a direction in which one end of the path points to the other end of the path. The second direction is a direction in which the other end of the path points to one end of the path.

In this possible implementation, the plurality of to-be-recommended items corresponding to the plurality of paths can be scored in the first direction and the second direction of each of the plurality of paths, so that the two directions of the path are considered during scoring. In this way, the evaluation result is more accurate compared with the evaluation result obtained in one direction in the conventional technology.

Optionally, in a possible implementation of the second aspect, the first direction of the foregoing step is consistent with a direction of a first vector. The second direction of the foregoing step is consistent with a direction of a second vector. For one path, the first vector is a vector pointing from the first entity that is in the path and that indicates the to-be-recommended item to an entity that is in the path and that is adjacent to the first entity indicating the to-be-recommended item. The second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user. The scoring, based on the first direction and the second direction of each of the plurality of paths, a plurality of to-be-recommended items corresponding to the plurality of paths includes: separately computing the probability that the first vector and the second vector of each path are aggregated at one entity included in each path.

In this possible implementation, the overlap probability of the information in the left and right flow directions in the path in the embedding space is computed, and the overlap probability feature of the aggregation node is computed. The overlap probability feature is used for outputting the semantic-level explanation, that is, the preference degree of the user for the entity node. The interest point of the user can be accurately found.

Optionally, in a possible implementation of the second aspect, the foregoing step of separately computing, the probability that the first vector and the second vector of each path are aggregated at one entity included in each path includes:

$$p_m = \frac{\exp\left(s_m^{left} s_m^{right}\right)}{\sum_{m=1}^{M} \exp\left(s_m^{left} s_m^{right}\right)},$$

, where

$p_m$ represents the probability; $s_m^{left}$ represents the first vector, and $s_m^{right}$ represents the second vector; or $s_m^{right}$ represents the first vector, and $s_m^{left}$ represents the second vector; exp represents an exponential function based on e; and M is a positive integer and M represents a quantity of paths between the to-be-recommended item and items or item attributes in the history record of the user.

Optionally, in a possible implementation of the second aspect, the neural network in the foregoing step is obtained by training the neural network by using a training sample as an input of the neural network and a loss function value less than a threshold as an objective. The training sample includes a plurality of training paths, or the training sample includes the knowledge graph for training, a first training identifier, and a second training identifier. An item indicated by the first training identifier and an item or an item attribute indicated by the second training identifier are an item or an item attribute in a historical item of the user. The loss function includes a first loss function. The first loss function indicates a difference between the evaluation result output by the neural network and a target result. The target result is related to the item or the item attribute in the history record of the user.

In this possible implementation, the neural network is trained by using the first loss function, so that the recommendation result is more accurate and meets the preference degree of the user.

Optionally, in a possible implementation of the second aspect, the loss function in the foregoing step further includes a second loss function. The second loss function indicates a difference between an embedding vector of a first training vector and an embedding vector of a second training vector in the training path of the knowledge graph for training. Two ends of the training path correspond to the item or the item attribute in the history record of the user.

In this possible implementation, the purpose of the second loss function is to minimize the computing error of the vectors in the left and right flow directions in the path that flow to a same node, so that in a relation matrix with a higher dimension in the embedding space, a computed embedding vector in the left is equal to a computed embedding vector in the right as much as possible. That is, the second loss function can be used to minimize the error that the two ends of the path flow to the same node, to resolve the problem that the two ends of the path flow to the same node in the complex relation.

Optionally, in a possible implementation of the second aspect, the loss function in the foregoing step further includes a third loss function. The third loss function indicates a difference between a computed embedding vector of the first entity and a real embedding vector of the first entity, and/or the third loss function indicates a difference between a computed embedding vector of the second entity and a real embedding vector of the second entity.

In this possible implementation, the third loss function can minimize an error of a head node vector and a tail node vector that are of a triplet mapping to a relational space, to resolve a problem that one-to-many or many-to-one mapping occurs in a single triplet in the complex relation.

According to a third aspect of embodiments of this application, a recommendation apparatus is provided. The recommendation apparatus includes: an obtaining unit, configured to obtain a knowledge graph, where the knowledge graph includes a plurality of first entities indicating an item and a plurality of second entities indicating an item attribute; and a running unit, configured to run a neural network based on the knowledge graph and information of a user, to obtain a recommendation result, where the information of the user indicates an item or an item attribute in a history record of the user. The recommendation result includes a recommended item. The neural network is configured to perform computing based on at least one first direction and at least one second direction in the knowledge graph to obtain the recommendation result. The first direction starts from a first entity indicating the recommended item or a to-be-recommended item. The second direction starts from a first entity indicating the item in the history record of the user, or the second direction starts from a second entity indicating the item attribute in the history record of the user.

Optionally, in a possible implementation of the third aspect, the recommendation result further includes an explanation for the recommended item, and the explanation is associated with one first direction and one second direction.

Optionally, in a possible implementation of the third aspect, the running unit of a communication apparatus is specifically configured to extract a plurality of paths from the knowledge graph based on the knowledge graph and the information of the user. Each path indicates an association between entities at two ends of the path. One end of each path corresponds to the to-be-recommended item. The other end of each path corresponds to the item or the item attribute in the history record of the user. The running unit is specifically configured to input the plurality of paths into the neural network to score a plurality of to-be-recommended items, so that the neural network obtains the recommendation result. The neural network is configured to perform computing based on a first direction and a second direction of each of the plurality of paths to obtain the recommendation result. For one path, the first direction is a direction in which one end of the path points to the other end of the path, and the second direction is a direction in which the other end of the path points to one end of the path.

Optionally, in a possible implementation of the third aspect, the running unit of the communication apparatus is specifically configured to input the knowledge graph and the information of the user into the neural network. The running unit is specifically configured to extract, by the neural network, a plurality of paths from the knowledge graph based on the knowledge graph and the information of the user. Each path indicates an association between entities at two ends of the path, one end of each path corresponds to the to-be-recommended item. The other end of each path corresponds to the item or the item attribute in the history record of the user. The running unit is specifically configured to score a plurality of to-be-recommended items based on the first direction and the second direction of each of the plurality of paths, so that the neural network obtains the recommendation result. For one path, the first direction is a direction in which one end of the path points to the other end of the path, and the second direction is a direction in which the other end of the path points to one end of the path.

Optionally, in a possible implementation of the third aspect, the first direction is consistent with a direction of a first vector. The second direction is consistent with a direction of a second vector. For one path, the first vector is a vector pointing from the first entity that is in the path and that indicates the to-be-recommended item to an entity that is in the path and that is adjacent to the first entity indicating the to-be-recommended item, and the second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user. The running unit is specifically configured to score, for each of the plurality of paths, based on a probability that the first vector and the second vector of each path are aggregated at one entity in each path, the to-be-recommended item corresponding to each path, to obtain the recommended item.

Optionally, in a possible implementation of the third aspect, the running unit of the communication apparatus is further configured to separately score the plurality of paths based on a first direction and a second direction of each of the plurality of paths, to obtain an explanation for the recommendation result. The explanation is a description of associations between entities at two ends indicated by the one or more paths in the obtained recommendation result.

Optionally, in a possible implementation of the third aspect, the first direction is consistent with the direction of the first vector. The second direction is consistent with the direction of the second vector. For one path, the first vector is the vector pointing from the first entity that is in the path and that indicates the to-be-recommended item to the entity that is in the path and that is adjacent to the first entity indicating the to-be-recommended item, and the second vector is the vector pointing from the first entity that is in the path and that indicates the item in the history record of the user to the entity that is in the path and that is adjacent to the first entity indicating the item in the history record of the user; or the second vector is the vector pointing from the second entity that is in the path and that indicates the item attribute in the history record of the user to the entity that is in the path and that is adjacent to the second entity indicating the item attribute in the history record of the user. The running unit is specifically configured to separately compute the probability that the first vector and the second vector of each path are aggregated at one entity included in each path, to obtain the explanation for the recommendation result.

Optionally, in a possible implementation of the third aspect, the running unit of the communication apparatus is specifically configured to separately compute, by using the following formula, the probability that the first vector and the second vector of each path are aggregated at one entity included in each path:

$$p_m = \frac{\exp\left(s_m^{left} s_m^{right}\right)}{\sum_{m=1}^{M} \exp\left(s_m^{left} s_m^{right}\right)},$$

where

$p_m$ represents the probability; $s_m^{left}$ represents the first vector, and $s_m^{right}$ represents the second vector; or $s_m^{right}$ represents the first vector, and $s_m^{left}$ represents the second vector; exp represents an exponential function based on e; and M is a positive integer and M represents a quantity of paths between the to-be-recommended item and items or item attributes in the history record of the user.

Optionally, in a possible implementation of the third aspect, the neural network is obtained by training the neural network by using a training sample as an input of the neural network and a loss function value less than a threshold as an objective. The training sample includes a plurality of training paths, or the training sample includes the knowledge graph for training and the item and/or the item attribute in the history record of the user for training. Each training path indicates the association between entities at the two ends of the training path. The two ends of each training path correspond to the item or the item attribute in the history record of the user. The loss function includes a first loss function. The first loss function indicates a difference between the recommendation result output by the neural network and a target result. The target result is related to the item or the item attribute in the history record of the user.

Optionally, in a possible implementation of the third aspect, the loss function further includes a second loss function. The second loss function indicates a difference between an embedding vector of a first training vector and an embedding vector of a second training vector in the training path of the knowledge graph for training. Two ends of the training path correspond to the item or the item attribute in the history record of the user.

Optionally, in a possible implementation of the third aspect, the loss function further includes a third loss function. The third loss function indicates a difference between a computed embedding vector of the first entity and a real embedding vector of the first entity, and/or the third loss function indicates a difference between a computed embedding vector of the second entity and a real embedding vector of the second entity.

According to a fourth aspect of embodiments of this application, a recommendation apparatus is provided. The recommendation apparatus includes: an obtaining unit, configured to obtain a knowledge graph, a first identifier, and a second identifier, where the knowledge graph includes a plurality of first entities indicating an item and a plurality of second entities indicating an item attribute, the first identifier indicates a to-be-recommended item, the second identifier indicates an item or an item attribute in a history record of a user, and the knowledge graph includes a first entity corresponding to the first identifier and a first entity or a second entity corresponding to the second identifier; and a running unit, configured to run a neural network based on the knowledge graph, the first identifier, and the second identifier, to obtain an evaluation result, where the evaluation result includes a probability that the to-be-recommended item is recommended. The neural network is configured to perform computing based on at least one first direction and at least one second direction in the knowledge graph, to obtain the evaluation result. The first direction starts from the first entity corresponding to the first identifier. The second direction starts from the first entity or the second entity corresponding to the second identifier.

Optionally, in a possible implementation of the fourth aspect, the evaluation result further includes a probability corresponding to a path in the knowledge graph based when the to-be-recommended item is recommended, one end of the path is the first entity corresponding to the first identifier, and the other end of the path is the first entity corresponding to the second identifier.

Optionally, in a possible implementation of the fourth aspect, the running unit of the communication apparatus is specifically configured to extract a plurality of paths from the knowledge graph based on the knowledge graph, the first identifier, and the second identifier. Each path indicates an association between entities at two ends of the path. One end of each path corresponds to the to-be-recommended item. The other end of each path corresponds to the item or the item attribute in the history record of the user. The running unit is specifically configured to input the plurality of paths into the neural network to score a plurality of to-be-recommended items, so that the neural network obtains the evaluation result. The neural network is configured to perform computing based on the first direction and the second direction of each of the plurality of paths to obtain the probability. For one path, the first direction is a direction in which one end of the path points to the other end of the path, and the second direction is a direction in which the other end of the path points to one end of the path.

Optionally, in a possible implementation of the fourth aspect, the running unit of the communication apparatus is specifically configured to input the knowledge graph, the first identifier, and the second identifier into the neural network. The running unit is specifically configured to extract, by the neural network based on the knowledge graph, the first identifier, and the second identifier, a plurality of paths from the knowledge graph. Each path indicates an association between entities at two ends of the path. One end of each path corresponds to the to-be-recommended item. The other end of each path corresponds to the item or the item attribute in the history record of the user. The running unit is specifically configured to score, based on the first direction and the second direction of each of the plurality of paths, a plurality of to-be-recommended items corresponding to the plurality of paths, so that the neural network obtains the evaluation result. For one path, the first direction is a direction in which one end of the path points to the other end of the path, and the second direction is a direction in which the other end of the path points to one end of the path.

Optionally, in a possible implementation of the fourth aspect, the first direction is consistent with a direction of a first vector. The second direction is consistent with a direction of a second vector. For one path, the first vector is a vector opointing from the first entity that is in the path and that indicates the to-be-recommended item to an entity that is in the path and that is adjacent to the first entity indicating the to-be-recommended item, and the second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user. The running unit is specifically configured to separately compute a probability that the first vector and the second vector of each path are aggregated at one entity included in each path.

Optionally, in a possible implementation of the fourth aspect, the running unit of the communication apparatus is specifically configured to separately compute, by using the following formula, the probability that the first vector and the second vector of each path are aggregated at one entity included in each path:

$$p_m = \frac{\exp\left(s_m^{left} s_m^{right}\right)}{\sum_{m=1}^{M} \exp\left(s_m^{left} s_m^{right}\right)},$$

where

$p_m$ represents the probability; $s_m^{left}$ represents the first vector, and $s_m^{right}$ represents the second vector; or $s_m^{right}$ represents the first vector, and $s_m^{left}$ represents the second vector; exp represents an exponential function based on e; and M is a positive integer and M represents a quantity of paths between the to-be-recommended item and items or item attributes in the history record of the user.

Optionally, in a possible implementation of the fourth aspect, the neural network is obtained by training the neural network by using a training sample as an input of the neural network and a loss function value less than a threshold as an objective. The training sample includes a plurality of training paths, or the training sample includes the knowledge graph for training, a first training identifier, and a second training identifier. An item indicated by the first training identifier and an item or an item attribute indicated by the second training identifier are an item or an item attribute in a historical item of the user. The loss function includes a first loss function. The first loss function indicates a difference between the evaluation result output by the neural network and a target result. The target result is related to the item or the item attribute in the history record of the user.

Optionally, in a possible implementation of the fourth aspect, the loss function further includes a second loss function. The second loss function indicates a difference between an embedding vector of a first training vector and an embedding vector of a second training vector in the training path of the knowledge graph for training. Two ends of the training path correspond to the item or the item attribute in the history record of the user.

Optionally, in a possible implementation of the fourth aspect, the loss function further includes a third loss function. The third loss function indicates a difference between a computed embedding vector of the first entity and a real embedding vector of the first entity, and/or the third loss function indicates a difference between a computed embedding vector of the second entity and a real embedding vector of the second entity.

According to a fifth aspect of embodiments of this application, a recommendation apparatus is provided. The recommendation apparatus or a component (such as a processor, a chip, or a chip system) of the recommendation apparatus performs the method according to the first aspect or any possible implementation of the first aspect.

According to a sixth aspect of embodiments of this application, a recommendation apparatus is provided. The recommendation apparatus or a component (such as a processor, a chip, or a chip system) of the recommendation apparatus performs the method according to the second aspect or any possible implementation of the second aspect.

According to a seventh aspect of embodiments of this application, a computer-readable storage medium is provided. The computer-readable storage medium stores instructions, and when the instructions are executed on a computer, the computer is enabled to perform the method according to the first aspect or any possible implementation of the first aspect, or the second aspect or any possible implementation of the second aspect.

According to an eighth aspect, a computer program product is provided. When the computer program product is run on a computer, the computer is enabled to perform the method according to the first aspect or any possible implementation of the first aspect, or the second aspect or any possible implementation of the second aspect.

According to a ninth aspect of embodiments of this application, a recommendation apparatus is provided, including a processor. The processor is coupled to a memory. The memory is configured to store a program or instructions. When the program or the instructions is/are executed by the processor, the apparatus is enabled to perform the method according to the first aspect or any possible implementation of the first aspect.

According to a tenth aspect of embodiments of this application, a recommendation apparatus is provided, including a processor. The processor is coupled to a memory. The memory is configured to store a program or instructions. When the program or the instructions is/are executed by the processor, the apparatus is enabled to perform the method according to the second aspect or any possible implementation of the second aspect.

For technical effects brought by the third aspect, the fifth aspect, the seventh aspect, the eighth aspect, and the ninth aspect, or any one of the possible implementations thereof, refer to the technical effects brought by the first aspect or the different possible implementations of the first aspect. Details are not described herein again.

For technical effects brought by the fourth aspect, the sixth aspect, the seventh aspect, the eighth aspect, and the tenth aspect, or any one of the possible implementations thereof, refer to the technical effects brought by the second aspect or the different possible implementations of the second aspect. Details are not described herein again.

It can be learned from the foregoing technical solutions that embodiments of this application have the following advantages: The knowledge graph is obtained, and the neural network is run based on the knowledge graph and the information of the user, to obtain the recommendation result. Compared with the conventional technology in which only the history record of the user is used as the start point for computing (that is, in the conventional technology, the recommendation result is computed in one direction) to obtain the recommendation result, the present invention performs the computing based on the at least one first direction and the at least one second direction in the knowledge graph to obtain the recommendation result. Therefore, the new recommendation method is provided, and the computing is performed in the two directions, so that the more accurate recommendation result is obtained, that is, the precision and/or the recall of the recommendation result can be improved.

## BRIEF DESCRIPTION OF DRAWINGS

To describe technical solutions in embodiments of the present invention or in the conventional technology more clearly, the following briefly introduces the accompanying drawings for describing embodiments or the conventional technology. It is clear that the accompanying drawings in the following description show merely some embodiments of the present invention, and persons of ordinary skill in the art may still derive other drawings from these accompanying drawings without creative efforts.

FIG. 1 is a schematic diagram of a recommendation network architecture according to an embodiment of this application;

FIG. 2 is a schematic diagram of an architecture for implementing a product according to an embodiment of this application;

FIG. 3 is a schematic diagram of another system architecture according to an embodiment of this application;

FIG. 4 is a schematic diagram of a structure of a recommendation network according to an embodiment of this application;

FIG. 5 is a schematic diagram of a structure of a processor of a neural network according to an embodiment of this application;

FIG. 6 is a schematic diagram of a structure of a recommendation network according to an embodiment of this application;

FIG. 7 is a schematic diagram of a structure of a path in a movie recommendation scenario according to an embodiment of this application;

FIG. 8 is a schematic flowchart of a recommendation method according to an embodiment of this application;

FIG. 9 is another schematic flowchart of a recommendation method according to an embodiment of this application;

FIG. 10 is a schematic diagram of another structure of a path in a movie recommendation scenario according to an embodiment of this application;

FIG. 11 is a schematic diagram of a graph shown in a game recommendation scenario according to an embodiment of this application;

FIG. 12 is a schematic diagram of a comparison result between a recommendation network and an existing recommendation model in accuracy according to an embodiment of this application;

FIG. 13 is a schematic diagram of a comparison result between a recommendation network and an existing recommendation model in a recall according to an embodiment of this application; and

FIG. 14 to FIG. 16 are schematic diagrams of several structures of a recommendation apparatus according to an embodiment of this application.

## DESCRIPTION OF EMBODIMENTS

Embodiments of this application provide a recommendation method, a recommendation network, and a related device. A neural network may be run based on a knowledge graph and information of a user, to obtain a recommendation result. The neural network is configured to perform computing based on at least one first direction and at least one second direction in the knowledge graph to obtain the recommendation result. Therefore, the new recommendation method is provided, so that a more accurate recommendation result can be obtained, that is, accuracy and/or a recall of the recommendation result can be improved. The new recommendation method may be applied to a scenario in which an item is recommended to a user, for example, movie recommendation or game recommendation.

The following clearly and completely describes technical solutions in embodiments of this application with reference to the accompanying drawings in embodiments of this application. It is clear that the described embodiments are only some rather than all of embodiments of this application.

The recommendation method provided in embodiments of this application can be applied to a scenario in which an item needs to be recommended, such as the movie recommendation, a product recommendation, a music recommendation, a restaurant recommendation, a book recommendation, or a web page recommendation. The following briefly describes a movie recommendation scenario and a game recommendation scenario.

1. Movie recommendation scenario

According to the recommendation method provided in embodiments, the neural network performs bidirectional propagation computing (described in detail below) to conclude that, when a user is a fan of both Chen Kaige and Zhang Guorong, if a movie *Farewell My Concubine* is recommended for the user, satisfaction of the user on a recommendation result can be greatly improved.

2. Game recommendation scenario

In the scenario in which the game is recommended for a user, for example, there are numerous complex relations between a recommended destined game *Team Fortress 2 (Team Fortress 2)* and a history play record of the user.

Some terms or concepts in embodiments of this application are described, to help persons skilled in the art have a better understanding.

1. Neural network

The neural network may include a neuron. The neuron may be an operation unit that uses $X_s$ and an intercept of 1 as an input. An output of the operation unit may be as follows:

$$h_{W,b}(x) = f(W^T x) = f(\sum_{s=1}^{n} W_s x_s + b).$$

s=1, 2, ..., or n, n is a natural number greater than 1, $W_s$ is a weight of $X_s$, and b is a bias of the neuron. $W_s$ is an activation function (activation function) of the neuron, and is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

2. Deep neural network

The deep neural network (deep neural network, DNN) is also referred to as a multi-layer neural network, and may be understood as a neural network having a plurality of hidden layers. There is no special metric for "a plurality of" herein. The DNN is divided based on locations of different layers, and the neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Certainly, the deep neural network may not include the hidden layer. This is not specifically limited herein.

Work at each layer of the deep neural network may be described by using a mathematical expression $\vec{y} = \alpha(W\vec{x} + \vec{b})$. From a physical layer, work at each layer of the deep neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operation 1, the operation 2, and the operation 3 are performed by $W\vec{x}$, the operation 4 is performed by $+ \vec{b}$, and the operation 5 is performed by $\alpha()$. The word "space" is used herein for expression because a classified object is not a single thing, but a type of things. Space is a collection of all individuals of such type of things. $W$ is a weight vector, and each value in the vector indicates a weight value of one neuron in the neural network at this layer. The vector W determines space transformation from the input space to the output space described above. In other words, a weight W at each layer controls how to transform space. A purpose of training the deep neural network is to finally obtain a weight matrix (a weight matrix formed by vectors W at a plurality of layers) at all layers of a trained neural network. Therefore, a training process of the neural network is essentially a manner of learning and controlling the space transformation, and more specifically, learning the weight matrix.

3. Loss function

During training of the neural network, because it is expected that an output of the neural network is as close as possible to a value that is actually expected to be predicted, a current predictive value of the network may be compared with a target value that is actually expected, and then a weight vector at each layer of the neural network is updated based on a difference between the current predictive value and the target value (certainly, there is usually an initialization process before a first update, that is, a parameter is preconfigured for each layer of the deep neural network). For example, if the predictive value of the network is large, the matrix vector is adjusted to lower the predictive value, and the adjustment continues until the neural network can predict the target value that is actually expected. Therefore, "how to obtain, through comparison, a difference between the predictive value and the target value" needs to be predefined. This is the loss function (loss function) or an objective function (objective function). The loss function and the objective function are important equations that measure the difference between the predictive value and the target value. The loss function is used as an example. A higher output value (loss) of the loss function indicates a larger difference. Therefore, training of the deep neural network is a process of minimizing the loss as much as possible.

4. Embedding vector (Embedding)

The embedding vector may also be referred to as "word embodiment", "vectorization", "vector mapping", "embedding", or the like. In form, the embedding vector is used to represent an object by using a dense vector, for example, a vector is used to represent a user identity document (identity document, ID), an item ID, or the like.

5. Knowledge graph (knowledge graph, KG)

The knowledge graph is a semantic network. The knowledge graph includes a plurality of entities and relations between the entities. The entity is a most basic element in the knowledge graph. The entity may be classified into a first entity and a second entity. The first entity is an entity indicating an item. The second entity is an entity indicating an item attribute. In an implementation, the second entity is directly connected to the first entity, that is, the first entity and the second entity are arranged in a staggered manner.
The item is an object that is distinguishable and exists independently, for example, a city, a commodity, a movie, or a game.
The item attribute can be considered as a description, an explanation, content, and an attribute of an item. Generally, the entity indicating the item attribute is directly connected to the entity indicating an item. For example, in a movie recommendation scenario, a movie genre of *Farewell My Concubine* is history. *Farewell My Concubine* is equivalent to the first entity indicating the movie. History is equivalent to the second entity indicating an attribute of the movie. The movie genre is a relation between the first entity and the second entity.

6. Triplet

The triplet is a concept in a computer data structure, is a compression mode mainly used for storing a sparse matrix, and is also called a triplet table. For example, the triplet includes an entity 1 (which may be referred to as a node), a relation between the entity 1 and an entity 2 (which may also be referred to as an edge), and the entity 2 (which may be referred to as a node), which form the triplet stored in a computer.

7. Knowledge representation (KG Embedding)

The knowledge representation is mainly to embed (embed) entities (entities) and relations (relations) in the knowledge graph into continuous vector space.

8. Cross entropy

The cross entropy is a common concept in deep learning, and is generally used to compute a difference between a target value and a predictive value. The cross entropy is often used as the loss function of the neural network.

9. L2 norm

The L2 norm is also referred to as a Euclidean norm, and represents a Euclidean distance from an origin to a point determined by a vector X.

10. Area under curve (area under curve, AUC) of a receiver operating characteristic curve (receiver operating characteristic curve, ROC)

The AUC is a performance metric for measuring merits and demerits of a learner, and may quantify a classification capability of ROC curve expression. The classification capability is closely related to a probability and a threshold. A larger AUC indicates a more reasonable output probability and a more reasonable ranking result.

11. Recommendation precision

Recommendation precision=Quantity of pieces of correct recommended information/Quantity of pieces of recommended information.

12. Recommendation recall

Recommendation recall=Quantity of pieces of correct recommended information/Quantity of pieces of information in a sample.

The neural network with a recommendation function in embodiments of this application, may also be understood as a recommendation network. To distinguish the neural network from an original neural network, the following replaces the neural network with the recommendation function with the recommendation network for description.

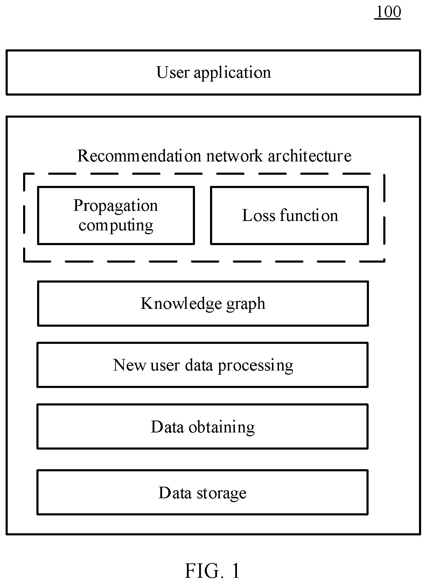

To better understand the recommendation method, the recommendation network, and the related device that are disclosed in embodiments of this application, the following first describes a system architecture that embodiments of the present invention are used in. As shown in FIG. 1, an embodiment of the present invention provides a recommendation network architecture 100.

The recommendation method provided in this application may be applied to a propagation computing and a loss function module of the recommendation network architecture 100. The recommendation network architecture is a general framework for neural network training oriented toward recommendation systems, and is more widely used in recent years.

To resolve a problem of how to obtain a recommendation result with a high precision in a bidirectional propagation manner when data is computed in embedding space, the propagation computing module runs a recommendation network based on a knowledge graph and information of a user, to obtain a recommendation result. The recommendation result includes a recommended item (or an identifier of a recommended item).

The recommendation network provided in this application may be a neural network, and may be specifically a deep neural network.

Optionally, to resolve a problem of how to obtain high-semantic explanation information when the data is computed in the embedding space, the propagation computing module uses a path as an input, and computes, in the bidirectional propagation manner from two ends of the path, a high-semantic explanation at nodes that are aggregated.

The loss function module resolves a problem that recommendation accuracy cannot be ensured in a recommendation network training process. In this application, a path loss function and a node loss function are added, so that performance metrics such as recommendation precision and a recall are greatly improved when a model is quickly aggregated, and reliability of the recommendation result and an explanation is improved.

A knowledge graph module is configured to create a knowledge graph or obtain an existing knowledge graph. For a description of the knowledge graph, refer to the foregoing description.

A new user processing module is configured to: when information such as a history record of the user is not newly added, first recommend some items to the user by using some policies (for example, a random method), quickly obtain feedback information (for example, node information such as an item ID or an item attribute clicked by the user), and then input these data into a network for more accurate recommendations.

A data obtaining module is configured to obtain the information of the user. The information of the user indicates an item (which may also be referred to as a historical item) or an item attribute (which may also be referred to as a historical item attribute) in the history record of the user.

Optionally, the data obtaining module may be further configured to obtain the information of the user, item information, and related external knowledge. The external knowledge includes but is not limited to the attribute information of the item (for example, a director, a cast member, and a genre of a film; a developer, a carrier, and classification of a game; or composition of news, time related, places related, and persons related), or user dimension characteristics (for example, an age or an occupation of the user). These data is used to create the knowledge graph.

A data storage module is configured to store the foregoing related data. This is not specifically limited herein.

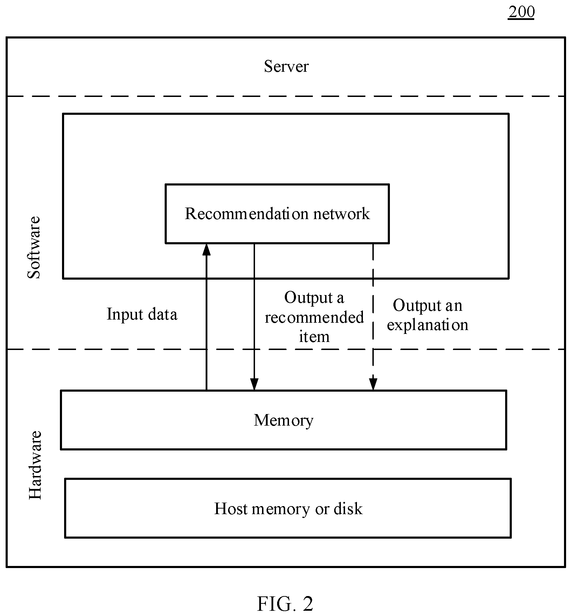

FIG. 2 is a schematic diagram of an architecture for implementing a product according to this embodiment of this application. The product may be included in the recommendation network architecture, and may be deployed on program codes on a server hardware. The recommendation network architecture shown in FIG. 1 is used as an example. The program code of this application may exist in the recommendation network. When a program is run, the program code of this application may run host storage and a hardware acceleration {a graphic processing unit (graphic processing unit, GPU), a field programmable gate array (field programmable gate array, FGPA), or a dedicated chip} memory of a server. A recommendation apparatus is an apparatus provided in this application, and is configured to input data, output a recommended item, and/or output an explanation.

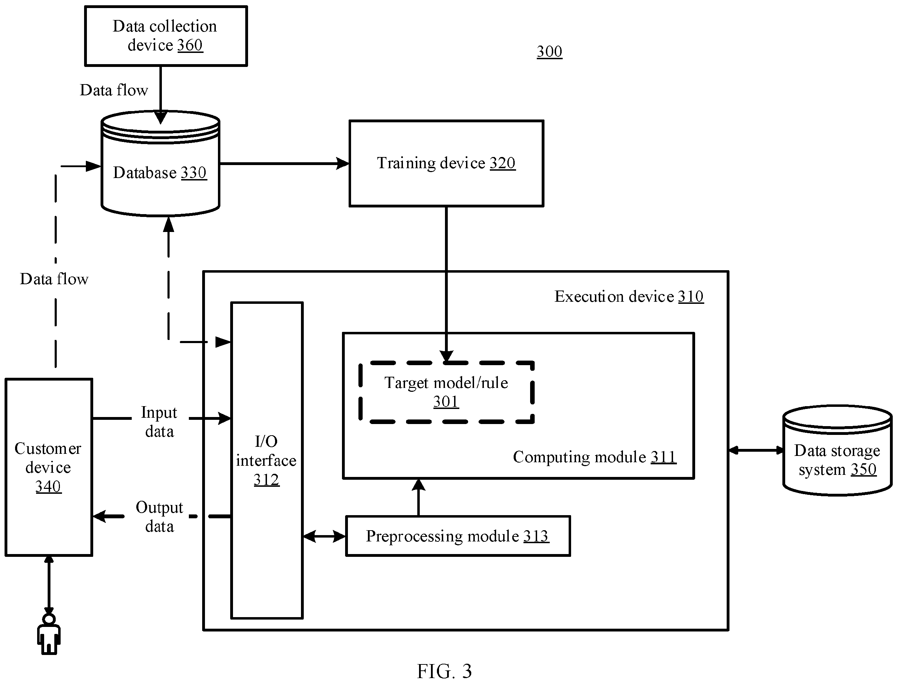

As shown in FIG. 3, an embodiment of the present invention provides another system architecture 300. As shown in the system architecture 300, a data collection device 360 is configured to collect a training sample. In this embodiment of this application, the training sample includes a plurality of training paths. Alternatively, the training sample includes a knowledge graph for training, a first training identifier, and a second training identifier. An item indicated by the first training identifier and an item or an item attribute indicated by the second training identifier are an item or an item attribute indicated by a historical item of a user. Alternatively, the training sample includes a knowledge graph for training, an item and/or an item attribute related to a historical record of a user for training. Each training path indicates an association between entities at two ends of the training path. The two ends of each training path correspond to the item or the item attribute related to the historical record of the user. In addition, the data collection device 360 stores the training sample in a database 330, and a training device 320 obtains a target model/rule 301 through training based on the training sample maintained in the database 330. The target model/rule 301 can be used to implement the recommendation method provided in embodiments of this application, that is, run the recommendation network based on the knowledge graph and the information of the user, to obtain the recommendation result. The recommendation result includes a recommended item. The information of the user indicates the item or the item attribute related to the historical record of the user. Further, the recommendation result may further include an explanation for the recommended item. The target model/rule 301 in this embodiment of this application may be specifically a recommendation network or a neural network. In this embodiment of this application, the recommendation network is obtained by training the training sample. It should be noted that, in actual application, the training sample maintained in the database 330 is not necessarily all collected by the data collection device 360, and may be received from another device. In addition, it should be noted that the training device 320 trains the target model/rule 301 not necessarily totally based on training data maintained in the database 330, and may perform model training based on training data obtained from a cloud or another place. The foregoing description should not be construed as a limitation on this embodiment of this application.

The target model/rule 301 obtained by the training device 320 through training may be applied to different systems or devices, for example, applied to an execution device 310 in FIG. 3. The execution device 310 may be a terminal, for example, a mobile phone terminal, a tablet computer, a notebook computer, or an in-vehicle terminal; or may be a server, or a cloud. In FIG. 3, the execution device 310 is configured with an I/O interface 312, configured to exchange data with an external device. The user may input data into the I/O interface 312 by using a customer device 340. In this embodiment of this application, the input data may include a plurality of paths. The input data may alternatively include the knowledge graph and the information of the user. The input data may alternatively include the knowledge graph a first identifier and a second identifier. The first identifier indicates a to-be-recommended item. The second identifier indicates the item or the item attribute in the history record of the user. The input data may further be from a database. This is not specifically limited herein.

A preprocessing module 313 is configured to perform preprocessing based on the input data received by the I/O interface 312. In this embodiment of this application, the preprocessing module 313 may be configured to randomly recommend some items to the user, and then determine a historical item (which can also be understood as the historical item being the item in the history record of the user) based on feedback of the user. The preprocessing module 313 can be configured to: extract, based on the knowledge graph and the information of the user, the plurality of paths from the knowledge graph, and send the extracted paths to a computing module 311.

In a related processing procedure in which the execution device 310 preprocesses the input data or the computing module 311 of the execution device 310 performs computing, or the like, the execution device 310 may invoke data, code, and the like in a data storage system 350 to implement corresponding processing, or may store, in a data storage system 350, data, instructions, and the like obtained through corresponding processing.

Finally, the I/O interface 312 returns a processing result, for example, the foregoing obtained recommendation result, to the customer device 340, so as to provide the processing result to the user.

It should be noted that the training device 320 may generate the corresponding target models/rules 301 based on different training data for different targets or different tasks. The corresponding target model/rule 301 may be used to implement the foregoing targets or complete the foregoing tasks, so as to provide a required result for the user.

In a case shown in FIG. 3, the user can manually set the input data. A manual setting can be performed by using a screen provided on the I/O interface 312. In another case, the customer device 340 may automatically send the input data to the I/O interface 312. If the customer device 340 requires authorization from the user to automatically send the input data, the user may set corresponding permission in the customer device 340. The user may view, in the customer device 340, the result output by the execution device 310. A specific presentation form may be a specific manner such as display, a sound, or an action. The customer device 340 may also be used as a data collection end to collect the input data that is input into the I/O interface 312 and the output result that is output from the I/O interface 312, as shown in the figure, use the input data and the output result as new sample data, and store the new sample data in the database 330. Certainly, alternatively, the customer device 340 may not perform collection, but the I/O interface 312 directly uses, as new sample data, the input data that is input into the I/O interface 312 and the output result that is output from the I/O interface 312, as shown in the figure, and stores the new sample data in the database 330.

It should be noted that FIG. 3 is merely a schematic diagram of a system architecture according to this embodiment of the present invention. A location relation between a device, a component, a module, and the like shown in the figure constitutes no limitation. For example, in FIG. 3, the data storage system 350 is an external memory relative to the execution device 310. In another case, the data storage system 350 may alternatively be disposed in the execution device 310.

As shown in FIG. 3, the target model/rule 301 is obtained through the training by the training device 320. The target model/rule 301 may be the recommendation network in embodiments of this application. Specifically, the recommendation network provided in embodiments of this application may be a deep neural network.

The following describes a hardware structure of a chip provided in an embodiment of this application.

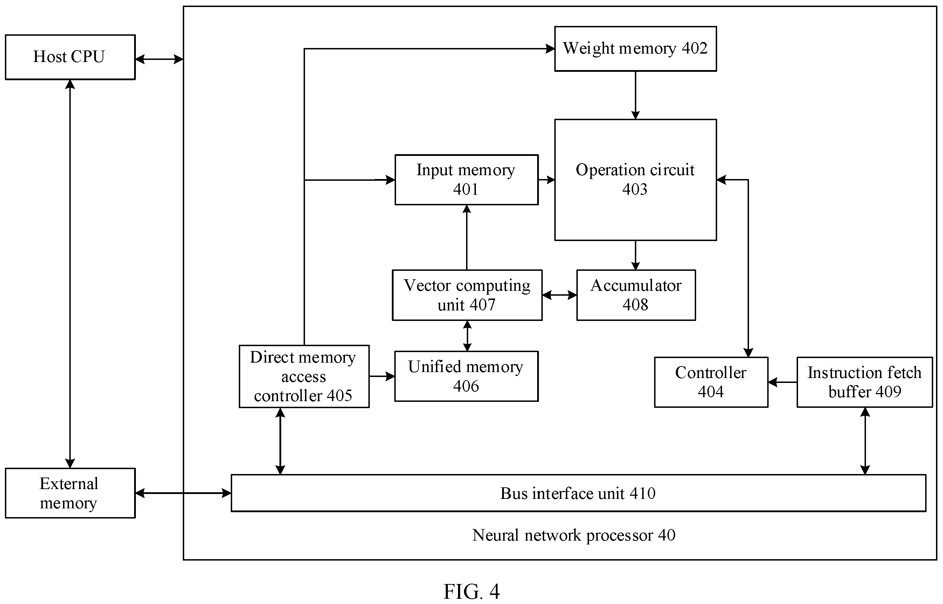

FIG. 4 shows the hardware structure of the chip provided in this embodiment of the present invention. The chip includes a neural network processor 40. The chip may be disposed in the execution device 310 shown in FIG. 3, to complete computing work of the computing module 311. The chip may alternatively be disposed in the training device 320 shown in FIG. 3, to complete training work of the training device 320 and output the target model/rule 301.

The neural network processor 40 may be any processor appropriate for large-scale exclusive OR operation processing, for example, a neural-network processing unit (neural-network processing unit, NPU), a tensor processing unit (tensor processing unit, TPU), or a graphics processing unit (graphics processing unit, GPU). For example, the neural network processor is the NPU. The neural network processing unit NPU 40, as a coprocessor, is attached to a host central processing unit (central processing unit, CPU) (host CPU). The host CPU assigns a task. A core part of the NPU is an operation circuit 403. The controller 404 controls the operation circuit 403 to extract data in a memory (a weight memory or an input memory) and perform an operation.

In some implementations, the operation circuit 403 internally includes a plurality of processing units (process engine, PE). In some implementations, the operation circuit 403 is a two-dimensional systolic array. Alternatively, the operation circuit 403 may be a one-dimensional systolic array or another electronic line capable of performing mathematical operations such as multiplication and addition. In some implementations, the operation circuit 403 is a general-purpose matrix processor.

For example, it is assumed that there is an input matrix A, a weight matrix B, and an output matrix C. The operation circuit extracts corresponding data of the matrix B from a weight memory 402, and buffers the data on each PE in the operation circuit. The operation circuit extracts data of the matrix A from an input memory 401, perform a matrix operation on the data of the matrix A and the data of the matrix B, to obtain a partial result or a final result of an obtained matrix and store in an accumulator accumulator 408.

A vector computing unit 407 may perform further processing on an output of the operation circuit, for example, vector multiplication, vector addition, exponential operation, logarithmic operation, or value comparison. For example, the vector computing unit 407 may be configured to perform network computing, such as pooling (pooling), batch normalization (batch normalization), or local response normalization (local response normalization), at a non-convolution/non-FC layer in a neural network.

In some implementations, the vector computing unit 407 can store a processed output vector into a unified buffer 406. For example, the vector computing unit 407 may apply a non-linear function to the output, for example, a vector of an accumulated value, of the operation circuit 403, to generate an activation value. In some implementations, the vector computing unit 407 generates a normalized value, a combined value, or both. In some implementations, the processed output vector can be used as an activation input to the operation circuit 403, for example, used in a subsequent layer in the neural network.

The unified memory 406 is configured to store input data and output data.

For weight data, a direct memory access controller (direct memory access controller, DMAC) 405 transfers the input data in an external memory to the input memory 401 and/or the unified memory 406. The weight data from the external memory is stored in the weight memory 402, and data in the unified memory 506 is stored in the external memory.

A bus interface unit (bus interface unit, BIU) 410 is configured to implement interaction between the host CPU, the DMAC, and an instruction fetch buffer 409 through a bus.

The instruction fetch buffer (instruction fetch buffer) 409 connected to the controller 404 is configured to store instructions used by the controller 404.

The controller 404 is configured to invoke the instructions buffered in the instruction fetch buffer 409, to control a working process of an operation accelerator.

Generally, the unified memory 406, the input memory 401, the weight memory 402, and the instruction fetch buffer 409 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

The following describes in detail the training method and the recommendation method of the recommendation network in embodiments of this application with reference to the accompanying drawings.

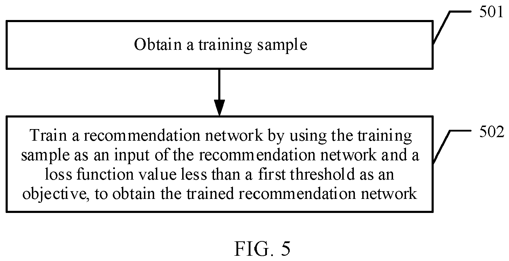

The following first describes in detail a training method of a recommendation network in an embodiment of this application with reference to FIG. 5. The method shown in FIG. 5 may be performed by a training apparatus of the recommendation network. The training apparatus of the recommendation network may be a cloud service device, or may be a terminal device, for example, an apparatus that has a computing capability enough for performing the training method of the recommendation network, such as a computer or a server, or may be a system including the cloud service device and the terminal device. For example, the training method may be performed by the training device 320 in FIG. 3 and the neural network processor 40 in FIG. 4.

Optionally, the training method may be processed by a CPU, or may be processed by both a CPU and a GPU. Alternatively, no GPU may be used, or another processor appropriate for computing of a neural network is used. This is not limited in this application.

The training method includes step 501 and step 502. The following describes the step 501 and the step 502 in detail.

Step 501: Obtain a training sample.

There are a plurality of cases of the training sample in this embodiment of this application, and the cases are separately described below.

1. The training sample includes a plurality of training paths.

Each training path indicates an association between entities at two ends of the training path. The two ends of each training path correspond to an item or an item attribute in a history record of a user.

In this embodiment of this application, an item or an item attribute in a positive event in the history record of the user may be understood as an item or an item attribute once in the positive event of the user that is indicated by a first entity or a second entity. The positive event is an event in which the user does not clearly express a rejective or negative intention (that is, disliked, not interested in, or not willing to pay attention), or expresses a positive intention such as attention, like, or interest. For example, that the user clicks, forwards, follows, comments, incentives (such as puts a coin and likes), favorites, browses, and browses an item or an item attribute for more than a threshold time is the positive event; and that the user clicks "Dislike", clicks "Do not show me", or clicks "Not interested", or selects "Do not recommend this on my homepage" is a negative event, and an item or an item attribute related to such history record should be removed and not entered.

2. The training sample includes a knowledge graph for training and an item or an item attribute in a history record of a user for training.

Optionally, the knowledge graph for training and a knowledge graph in a specific recommendation process may be the same or different. This is not specifically limited herein.

Optionally, the knowledge graph for training includes a plurality of triplets. The plurality of triplets are connected with a same entity.

3. The training sample includes a knowledge graph for training, a first training identifier, and a second training identifier.

An item indicated by the first training identifier and an item or an item attribute indicated by the second training identifier are an item (which a historical item) or an item attribute (which may also be referred to as a historical item attribute) in a historical item of a user.

Identifiers in this embodiment of this application (a first identifier, a second identifier, the first training identifier, and the second training identifier) each may be an ID, a name, or the like. This is not specifically limited herein.

There are the plurality of cases of the training sample in this embodiment of this application. The foregoing several cases are examples. It can be understood that in actual application, adaptive adjustment may be performed on the training sample based on a requirement. This is not specifically limited herein.

An item in this embodiment of this application (a to-be-recommended item, a recommended item, and the item in the history record of the user for training) may be a movie, a game, music, news, or the like. This is not specifically limited herein.

A relation between two entities in this embodiment of this application may be a movie genre, a leading actor, a director, a screenwriter, or the like; or may be a game developer, a game publisher, a game operating platform, a game type, a game release year, or the like; or may be a singer, a composer, a lyricist, or the like. This is not specifically limited herein.

Step 502: Train the recommendation network by using the training sample as an input of the recommendation network and a loss function value less than a first threshold as an objective, to obtain the trained recommendation network.

The recommendation network provided in this embodiment of this application may be an independent recommendation system with explanation information, or may output explanation information for an existing recommendation system. In other words, the recommendation network provided in this embodiment of this application may output an explanation for the recommended item. The recommended item may be a recommended item output by the existing recommendation system. Certainly, the recommendation network provided in this embodiment of this application may further output a score of the recommended item and an explanation for the recommended item or the to-be-recommended item.

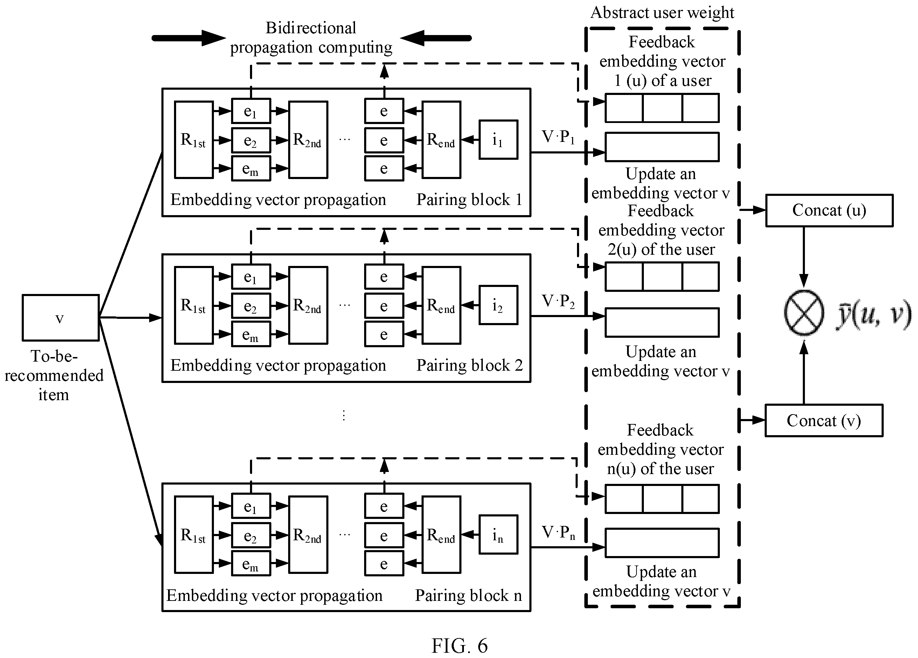

For a structure of the recommendation network in this embodiment of this application, refer to FIG. 6. The structure of the recommendation network provided in this application may include bidirectional propagation (or referred to as bidirectional propagation computing).

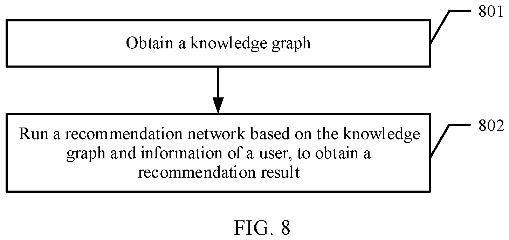

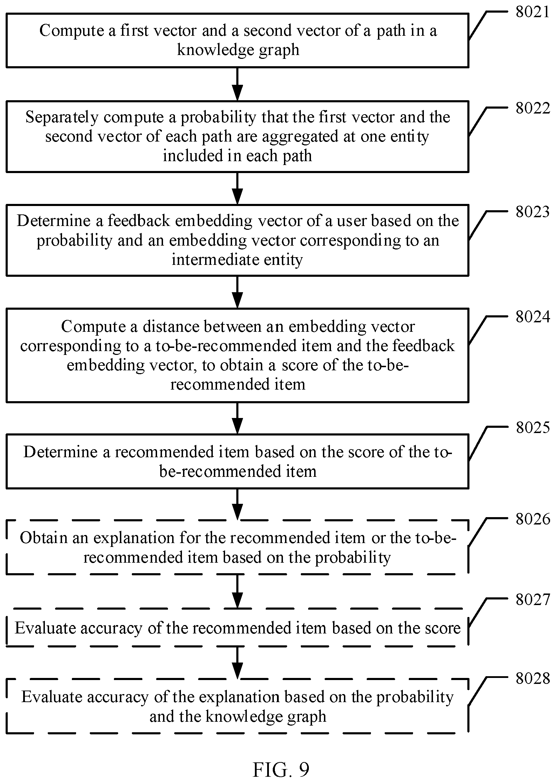

The bidirectional propagation can be understood as computing performed from at least one first direction and at least one second direction to obtain a recommendation result (for a specific computing process, refer to embodiments shown in FIG. 8 and FIG. 9). The first direction starts from a first entity indicating the recommended item or the to-be-recommended item. The second direction starts from a first entity indicating the item in the history record of the user, or the second direction starts from a second entity indicating the item attribute in the history record of the user.

Further, a plurality of to-be-recommended items are scored based on a first direction and a second direction of each of a plurality of paths. TOP K is selected as the recommended item based on a requirement, where K is an integer greater than 1.

For example, if K is 2, to-be-recommended items corresponding to first two scores in the plurality of to-be-recommended items are determined as the recommended items.

Optionally, the bidirectional propagation can also be understood as step-by-step computing performed from left and right endpoints of a path to an intermediate node. The path is extracted from the knowledge graph based on the knowledge graph and information of the user.

Optionally, one end of the path corresponds to the to-be-recommended item, and the other end of the path corresponds to the item (which can also be understood as the historical item) or the item attribute in the history record of the user. The intermediate node may be an item or an item attribute. This is not specifically limited herein.

In this embodiment of this application, the information of the user may include user-related information, such as a user ID, an item or an item attribute of an item clicked by the user (which may also be understood as the historical item), an age of the user, and an occupation of the user.

Optionally, the bidirectional propagation separately scores, based on the first direction and the second direction of each of the plurality of paths, the plurality of paths, to obtain the explanation for the recommendation result.

Further, the plurality of paths are scored based on the first direction and the second direction of each of the plurality of paths. The TOP K is selected as the recommended item based on the requirement, where K is an integer greater than 1.

In this embodiment of this application, for one path, the first direction is a direction in which one end of the path points to the other end of the path, and the second direction is a direction in which the other end of the path points to one end of the path. One end of the path corresponds to the to-be-recommended item, and the other end of the path corresponds to the historical item or the historical item attribute.

For example, if K is 2, paths corresponding to first two scores in the plurality of paths are determined as the explanation for the recommendation result, or first two probabilities in probabilities corresponding to aggregation nodes in both left and right flow directions in the plurality of paths are determined as the explanation for the recommendation result.

Further, an overlap probability of information in left and right flow directions in the path in embedding space is computed, and an overlap probability feature of an aggregation node is computed. The overlap probability feature is used for outputting a semantic-level explanation, that is, a preference degree of the user for an entity node. That is, the probability that vectors in two flow directions are aggregated is computed. The overlap probability feature indicates a probability that a connection between the to-be-recommended item and the history record of the user (the item or the item attribute clicked by the user) is activated (a larger probability indicates a more significant preference degree of the user). An objective is to find an interest of the user. For example, eight of ten movies watched by a user A are all cast by actor Stephen Chow Sing-Chi. In this case, there is a high probability that the path includes a node "Stephen Chow Sing-Chi". The overlap probability can be used as the explanation for the recommended item, that is, an entity node with semantics in the path (which may also be understood as the second entity corresponding to the item attribute) can be used to describe potential preferences of the user (for example, a name of a movie director and a book type). An operation (for example, multiplication) is performed on an embedding vector of the attribute node and a probability that a corresponding path is activated, to obtain feedback information of a single path (for example, Feedback information=Probability value×Embedding vector of Stephen Chow Sing-Chi in the embedding space, that is, the feedback information may be v×Probability value p).

In FIG. 6, v represents the to-be-recommended item, one pairing block corresponds to one historical item i, and there are a plurality of pairing blocks (pairing block 1, pairing block 2, ..., pairing block n) between the to-be-recommended item v and a plurality of historical items ($i_1$, $i_2$, ..., $i_n$). There are m paths between one historical item i and the to-be-recommended item v. Each path includes a plurality of entities e and a relation R between the entities e, where e may be a first entity indicating an item, or may be a second entity indicating an item attribute, and m is an integer greater than 1.

The following describes the bidirectional propagation computing by using the pairing block 1 in FIG. 6 as an example.

The pairing block 1 corresponds to a historical item $i_1$. There are m paths between the pairing block 1 and the to-be-recommended item v. A first path includes v- $R_{1st}$ - $e_1$ - $R_{2nd}$ -...-e- $R_{end}$ - $i_1$ . A second path includes v- $R_{1st}$ - $e_2$ - $R_{2nd}$ -...-e-$R_{end}$ - $i_1$. An $m^{th}$ path includes v- $R_{1st}$ - $e_m$ - $R_{2nd}$ -...-e- $R_{end}$ - $i_1$. $R_{1st}$ represents a relation matrix between the to-be-recommended item v and an entity $e_1$. $R_{2nd}$ represents a relation matrix between the entity $e_1$ and another entity e. $R_{end}$ represents a relation matrix between another entity e and the historical item $i_1$ . For the first path in the pairing block 1, bidirectional propagation computing performed on the first path is equivalent to computing a probability that vectors in left and right flow directions are aggregated at the first path, that is, a probability that the to-be-recommended item v and the historical item $i_1$ in the first path flow to an intermediate entity.

Optionally, one path corresponds to one probability. Therefore, such probability may be used as a score of the path. The score is selected in descending order based on a requirement of TOP K, to obtain the explanation for the recommended item. A denominator used for computing the probability may be a sum of m probabilities corresponding to m paths in one pairing block. Certainly, to avoid a probability of 100% caused by only a single path, and avoid affecting accuracy of subsequent recommendation, the denominator used for computing the probability may be a sum of n×m probabilities corresponding to n×m paths in n pairing blocks. This is not specifically limited herein.

The explanation in this embodiment of this application may be the probability, or may be a description of associations between entities at two ends indicated by one or more paths of the obtained recommendation item.

$R_{2nd}$ may also be $R_{end}$, and $e_2$ is $e_m$, that is, one path includes at least three entities (v, e, i) and two relation matrices ($R_{1st}$ , $R_{end}$). One pairing block corresponds to one u. After u corresponding to each pairing block is obtained, u corresponding to each pairing block can be directly added or accumulatively weighted summed to obtain a feedback embedding vector u of the user.

In this embodiment of this application, that a score of the to-be-recommended item is a distance (that is, $\hat{y}$) between the to-be-recommended item and the feedback embedding vector is used as an example. It can be understood that the score of the to-be-recommended item may alternatively be u corresponding to one pairing block. The score of the to-be-recommended item may alternatively be a feedback embedding vector obtained by adding the plurality of pairing blocks, or the like. This is not specifically limited herein.

Optionally, one pairing block corresponds to one u. Therefore, u may be used as the score of the to-be-recommended item. The score is selected in the descending order based on a requirement of TOP K, to obtain the recommended item. Certainly, the feedback embedding vector obtained by adding u corresponding to the plurality of pairing blocks may also be used as a score to select the recommended item. This is not specifically limited herein.

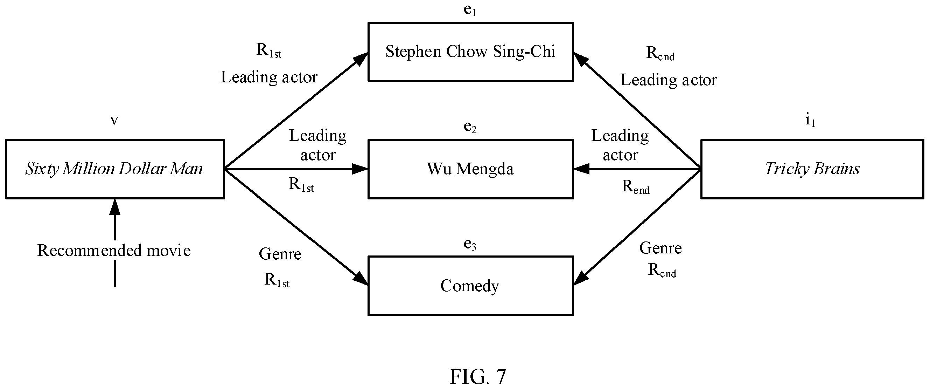

For example, a path between the to-be-recommended item v and the pairing block 1 is shown in FIG. 7. The to-be-recommended item v is *Sixty Million Dollar Man.* A relation matrix $R_{1st}$ includes a relation matrix of a leading actor and a relation matrix of a genre. The entity $e_1$ is Stephen Chow Sing-Chi, an entity $e_2$ is Wu Mengda, and an entity $e_3$ is comedy. A relation matrix $R_{end}$ includes a relation matrix of a leading actor and a relation matrix of a genre. That is, the first path in FIG. 7 includes *Sixty Million Dollar Man*-Leading actor-Stephen Chow Sing-Chi-Leading *actor-Tricky Brains.* The second path includes *Sixty Million Dollar Man*-Leading actor-Wu Mengda-Leading actor-*Tricky Brains.* A third path includes *Sixty Million Dollar Man*-Genre-Comedy-Genre-*Tricky Brains.* A flow direction of one end of the first path is from *Sixty Million Dollar Man* to Stephen Chow Sing-Chi by a relation (leading actor). A flow direction of the other end of the first path is from *Tricky Brains* to Stephen Chow Sing-Chi by a relation (leading actor).

Optionally, the recommendation network further computes an abstract user weight and the score of the to-be-recommended item. The abstract user weight is used to compute the feedback embedding vector u of the user. The score computing is used to compute the distance (that is, the score $\hat{y}$ of the to-be-recommended item) between the to-be-recommended item and the feedback embedding vector u. Further, the recommendation network may output, based on scores of the to-be-recommended item, to the user in descending order of scores, a to-be-recommended item (that is, a recommended item) corresponding to the score, or may select a score in descending order based on a requirement of the TOP K, to obtain the recommended item. Further, the abstract user weight may be used to update the embedding vector of the to-be-recommended item v, that is, p is a probability corresponding to a path with a maximum probability in the plurality of paths in the pairing block. Certainly, p may alternatively be set to 1, that is, the embedding vector of the to-be-recommended item v is not updated. This is not specifically limited herein.

The recommendation result in this embodiment of this application may include the to-be-recommended item. The recommendation result may alternatively include the to-be-recommended item and the explanation for the to-be-recommended item. Certainly, the recommendation result may alternatively include the to-be-recommended item, the explanation for the to-be-recommended item, the score corresponding to the to-be-recommended item. This is not specifically limited herein.

In this embodiment of this application, a loss function indicates a difference between the recommendation result of the recommendation network and a target recommendation result. In this case, the recommendation network is trained by using an objective of reducing a value of the loss function, to be specific, continuously reducing the difference between the recommendation result of the recommendation network and the target recommendation result. Such training process may be understood as a recommendation task. The loss function may be understood as a loss function corresponding to the recommendation task.

Optionally, if the recommendation result includes the score of the to-be-recommended item, the score is used to describe a preference degree of the user for the to-be-recommended item. A higher score indicates that the user likes the to-be-recommended item more. The score is then selected in descending order based on the requirement of the TOP K, to obtain the recommended item.

Optionally, if the recommendation result includes the score of the to-be-recommended item, the loss function includes a first loss function. The first loss function indicates a difference between a computed score and an actual score that are of the recommended item output by the recommendation network. The actual score is a score corresponding to the historical item selected by the user. The computed score is the score output by the recommendation network.

Optionally, the first loss function uses the following formula:

$$\min L_1 = \sum -\left( y \log\left( \hat{y} \right) + (1-y)\log\left( 1 - \hat{y} \right) \right).$$

In a binary classification scenario, y is a positive or negative sample, that is, a value of y is 1 or 0. $\overline{\hat{y}}$ represents a distance between u and v, and may be specifically the distance between $u^T$ and v. This is not limited herein.

Further, the loss function further includes a second loss function. The second loss function indicates a difference between an embedding vector of a first training vector and an embedding vector of a second training vector in the path of the knowledge graph. For a training path, a first training vector is a vector of a first entity indicating the to-be-recommended item from the training path pointing to an entity adjacent to the first entity indicating the to-be-recommended item in the training path. A second training vector is a vector of a first entity indicating the item in the history record of the user from the training path pointing to an entity adjacent to the first entity indicating the item in the history record of the user in the training path, or the second training vector is a vector of a second entity indicating the item attribute in the history record of the user from the training path pointing to an entity adjacent to the second entity indicating the item attribute in the history record of the user in the training path. In the training process, the to-be-recommended item is also an item clicked by the user.

Optionally, the first training vector is the vector of the first entity corresponding to the to-be-recommended item in the path pointing to the entity adjacent to the first entity. The second training vector is the vector of the first entity corresponding to the historical item pointing to the entity adjacent to the first entity, or the second training vector is the vector of the first entity corresponding to the historical item attribute pointing to the entity adjacent to the first entity.

In other words, a purpose of the second loss function is to minimize a computing error of the vectors in the left and right flow directions in the path that flow to a same node, so that in a relation matrix with a higher dimension in the embedding space, a computed embedding vector in the left is equal to a computed embedding vector in the right as much as possible.

For example, two triplets in the training knowledge graph are respectively "*Farewell My Concubine-leading* actor-Zhang Guorong" and "*Farewell My Concubine-leading* actor-Zhang Fengyi". In this case, intermediate entities "Zhang Guorong" and "Zhang Fengyi" are not a same entity, that is, the intermediate entities cannot be aligned, and the training of the recommendation network is difficult to converge. Therefore, the second loss function is introduced to minimize the difference between the first training vector and the second training vector (that is, a vector obtained by *Farewell My Concubine*+"First training relation: leading actor" is equal to a vector obtained by *Days of Being Wild*+"First training relation: leading actor" as much as possible, so that computing of the path is correct and convergence of the recommendation network is accelerated).

Optionally, the second loss function uses the following formula:

$$\min L_2 = \sum - \ln \sigma \left( \max \left| \varepsilon_{im} - \varepsilon'_{im} \right| \right).$$

$\sigma$ is an activation function. $\varepsilon_{im}$ represents a first feature vector that flows from one end of the path to the intermediate entity (or an adjacent entity). $\varepsilon'_{im}$ represents a second feature vector that flows from the other end of the path to the intermediate entity (or the adjacent entity). max represents a number with a maximum difference in a plurality of dimensions.

It can be understood that the foregoing formula may further have other variants. For example, max may be replaced with avg (representing an average of differences in the plurality of dimensions), and $\varepsilon_{im}$ is replaced with $g(\varepsilon_{im})$. $g(\ )$ represents graph computing. A specific formula of the second loss function may further have other variants. This is not specifically limited herein.

Further, the loss function may further include a third loss function. The third loss function indicates a difference between a computed embedding vector of an entity and a real embedding vector of the entity. The entity includes the first entity indicating the item and the second entity indicating the item attribute.

The foregoing example is still used. A purpose of the third loss function is to make a vector obtained by adding a head *Farewell My Concubine* of the triplet and the relation "leading actor" equal to a vector of a dimension "Zhang Guorong" as much as possible.

Optionally, the third loss function uses the following formula:

$$\min L_3 = \sum - \ln \sigma \left( s_{im} - M_r e \right) + X_2 ;$$

, and

$$\varepsilon_{im} = s_{im}^T * e .$$

$\sigma$ is an activation function. $s_{im}$ represents that a head node in the triplet flows to a tail node to obtain a computed embedding vector of the tail node. $s_{im}$ can be understood as the first training vector or the second training vector. $M_r e$ is a real embedding vector of the tail node. $X_2$ is a regularization function, and is used to avoid overfitting. Optionally, $X_2$ is mean-square error.

It can be understood that the foregoing formula may further have other variants. For example, $s_{im}$ may be replaced with $g(s_{im})$, and $M_r e$ is replaced with $g(M_r e)$. $g(\ )$ represents graph computing. A specific formula of the third loss function may further have other variants. This is not specifically limited herein.

Optionally, if the loss function includes the first loss function, a value of the loss function is a value of the first loss function. If the loss function includes the first loss function and the second loss function, a value of the loss function may be a sum, an average, a weighted average or the like of a value of the first loss function and a value of the second loss function. This is not specifically limited herein. Similarly, if the loss function includes the first loss function, the second loss function, and the third loss function, a value of the loss function may be a sum, an average, a weighted average or the like of a value of the first loss function, a value of the second loss function, and the third loss function. A specific manner of determining the value of the loss function is not limited herein.

Optionally, the value of the loss function may be computed in the following computing manner:

$$\min L = \sum - \left( y \log \left( \hat{y} \right) + (1-y) \log \left( 1 - \hat{y} \right) \right)$$
$$+ \lambda_1 \sum - \ln \sigma \left( \max \left| \varepsilon_{im} - \varepsilon'_{im} \right| \right)$$
$$+ \lambda_2 \sum - \ln \sigma \left( s_{im} - M_r e \right) + \lambda_3 X_2$$

$\lambda_1$, $\lambda_2$, and $\lambda_3$ are adjustable coefficients, and may be set based on an actual requirement. This is not specifically limited herein.

According to an aspect, the recommendation network provided in this application can score the to-be-recommended item through the bidirectional propagation computing, to obtain the recommended item; and score a path, to obtain the explanation for the to-be-recommended item, that is, to obtain an explanation for semantic information between any two connected entities. According to another aspect, the loss function provided in this embodiment of this application can improve precision of the recommendation network in the training process (for details, refer to the following evaluation of the recommendation network and a description corresponding to Table 1). Specifically, the second loss function provided in this embodiment of this application can be used to minimize an error that the two ends of the path flow to a same node, to resolve a problem that the two ends of the path flow to the same node in a complex relation. The third loss function in this embodiment of this application can minimize an error of a head node vector and a tail node vector that are of a triplet mapping to relational space, to resolve a problem that one-to-many or many-to-one mapping occurs in a single triplet in the complex relation.

It should be noted that the training process can alternatively use another training method except the foregoing method. This is not limited herein.

The following describes in detail the recommendation method in embodiments of this application with reference to the accompanying drawings.

FIG. 8 shows an embodiment of the recommendation method according to embodiments of this application. The method may be performed by a cloud service device, or may be performed by a terminal device, for example, a recommendation apparatus that has a computing capability enough for performing the recommendation method, such as a computer or a server, or may be a system including the cloud service device and the terminal device. For example, the method may be performed by the execution device 310 in FIG. 3 and the neural network processor 40 in FIG. 4.

Optionally, the method may be performed by a CPU, or may be a CPU and a GPU. Alternatively, no GPU may be used, or another processor appropriate for neural network computing is used. This is not specifically limited herein.

The recommendation method in this embodiment of this application may be applied to scenarios such as a movie recommendation, a game recommendation, a music recommendation, or a news recommendation. This is not specifically limited herein. The following describes the recommendation method provided in this embodiment of this application by using a movie recommendation scenario as an example.

The method includes:

Step 801: Obtain a knowledge graph.

The knowledge graph in this embodiment of this application includes a plurality of first entities indicating an item and a plurality of second entities indicating an item attribute. The knowledge graph may be an existing knowledge graph, or may be a newly created knowledge graph. This is not specifically limited herein.

In addition, for a description of the knowledge graph, refer to the foregoing term description and a description corresponding to FIG. 1. Details are not described herein again.

The knowledge graph in this embodiment of this application may have a function associated with a history record of a user (which can also be understood that the knowledge graph can distinguish which items in the knowledge graph are not clicked by the user and which items are clicked by the user, that is, a path can be directly selected based on the knowledge graph), or may not have a function associated with a history record of a user (which can also be understood that a path can be determined based on an identifier of the user, an identifier of an item, and the knowledge graph). This is not specifically limited herein.

The knowledge graph in this embodiment of this application may be a knowledge graph created for one user, or may be a knowledge graph created for a plurality of users. This is not specifically limited herein.

If the knowledge graph is the newly created knowledge graph, information of a user, item (a to-be-recommended item and a historical item) information, and related external knowledge are first obtained. The external knowledge includes but is not limited to attribute information of the item (for example, a director, a cast member, and a genre of a movie; a developer, a carrier, and classification of a game; or composition of news, time related, places related, and persons related), or user dimension characteristics (for example, an age distribution or an occupation of the user). Certainly, the obtained information may also be filtered, that is, different users are recommended by group. For example, users with similar age distributions are set as a group, to improve recommendation efficiency. The to-be-recommended item is an item that is not clicked by the user (for example, a movie that is not watched by the user). The historical item is an item that is clicked by the user (for example, a movie that is previously watched by the user).

Optionally, if the user is a new user, there may be a relatively small amount of item information, and some policies (for example, a random method) may be used to first recommend some items to the user. After feedback information is obtained, the item information and/or item attribute information are/is obtained.

Optionally, after the foregoing information is obtained, a triplet may be created first, and then triplets with a same node are connected to create the knowledge graph for recommendation.

For example, one triplet includes Movie name: *Farewell My Concubine*-Relation: leading actor-entity: Zhang Guorong. Another triplet includes Movie name: *Days of Being* Wild-Relation: leading actor-entity: Zhang Guorong. The two triplets have a common entity node (Zhang Guorong), and the two triplets are connected through Zhang Guorong.

Step 802: Run a recommendation network based on the knowledge graph and information of the user, to obtain a recommendation result.

The recommended network used in this step may be constructed by using the method in FIG. 5, or may be constructed in another manner. This is not specifically limited herein.

In this embodiment of this application, there are a plurality of cases in which the recommendation network is run based on the knowledge graph and the information of the user, and the cases are separately described below.

Case 1: The recommendation network is run by using a path as an input.

Based on the knowledge graph and the information of the user, a plurality of paths are extracted from the knowledge graph. Each path indicates an association between entities at two ends of the path.

Optionally, the plurality of paths are input into the recommendation network, to score a plurality of to-be-recommended items, so that the recommendation network obtains the recommendation result.

Case 2: The recommendation network is run by using the knowledge graph and the information of the user as an input.

The knowledge graph and the information of the user are input into the recommendation network. The recommendation network extracts a plurality of paths from the knowledge graph based on the knowledge graph and the information of the user. Each path indicates an association between entities at two ends of the path.

Optionally, the information of the user may include a first identifier and a second identifier. The first identifier indicates a to-be-recommended item. The second identifier indicates the historical item or a historical item attribute. The knowledge graph includes a first entity corresponding to the first identifier and a first entity or a second entity corresponding to the second identifier.

Optionally, based on a first direction and a second direction of each of the plurality of paths, a plurality of to-be-recommended items are scored, so that the recommendation network obtains the recommendation result.

It may be understood that the foregoing several manners are merely examples. In actual application, there may be another input manner. This is not specifically limited herein.

Regardless of the foregoing input manners, an objective of the foregoing plurality of manners is to determine the plurality of paths, and then obtain the recommendation result. The recommendation result may include a recommended item. The recommendation result may alternatively include an explanation for the recommended item (which may also be understood as an evaluation result). The recommendation result may alternatively include the recommended item and an explanation for the recommended item. This is not specifically limited herein.

Optionally, for each of the plurality of paths, the to-be-recommended item corresponding to each path is scored based on a probability that a first vector and a second vector of the path are aggregated at one entity in the path, to obtain the recommended item.

Optionally, the plurality of paths are separately scored based on the first direction and the second direction of each of the plurality of paths, to obtain the explanation for the recommendation result. The explanation is a description of associations between the entities at the two ends indicated by the one or more paths in the obtained recommendation result.

With reference to FIG. 9, the following describes how to obtain the recommendation result based on the plurality of paths. As shown in FIG. 9, obtaining the recommendation result based on the plurality of paths may include the following steps:

Step 8021: Compute a first vector and a second vector of a path in the knowledge graph.

A direction of the first vector is consistent with the first direction. A direction of the second vector is consistent with the second direction. For one path, the first vector is a vector of the first entity indicating the to-be-recommended item from the path pointing to an entity adjacent to the first entity indicating the to-be-recommended item in the path. The second vector is a vector of the first entity indicating the historical item from the path pointing to an entity adjacent to the first entity indicating the historical item in the path, or the second vector is a vector of the second entity indicating the historical item attribute from the path pointing to an entity adjacent to the second entity indicating the historical item attribute in the path.

For ease of description, it is defined that the first entity for indicating the item in this embodiment of this application is classified into a first recommendation entity and a first historical entity, that is, the first entity indicating the recommended item or the to-be-recommended item is the first recommendation entity, and the first entity indicating the item in the history record of the user is the first historical entity. The path includes the first recommendation entity, a first associated entity, a first relation between the first recommendation entity and the first associated entity, a second associated entity, the first historical entity, and a second relation between the first historical entity and the second associated entity. The first associated entity and/or the second associated entity may be an entity for indicating the item or an entity for indicating the item attribute. This is not specifically limited herein.

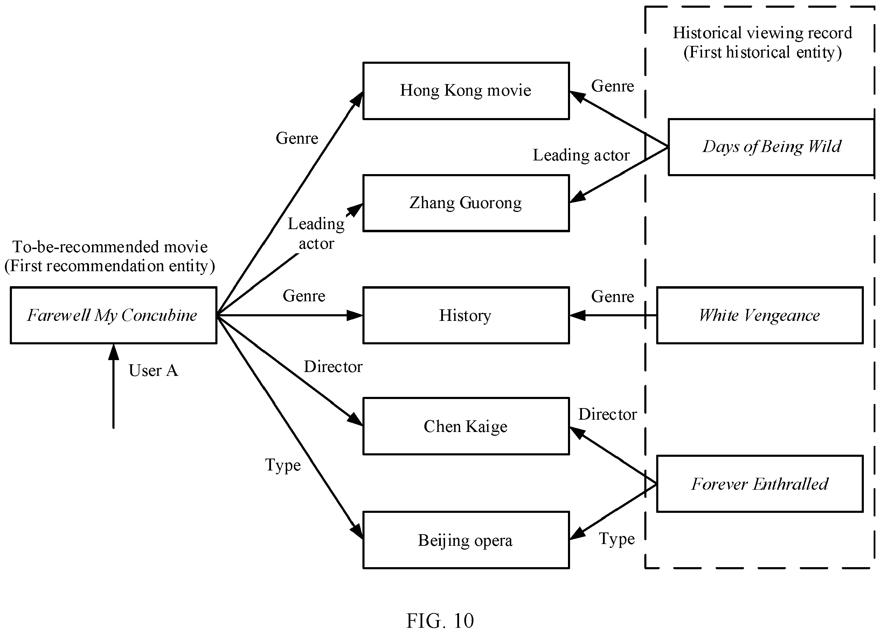

For example, one first recommendation entity and three first historical entities are used as an example. As shown in FIG. 10, the first recommendation entity is *Farewell My Concubine.* A historical viewing record (that is, the first historical entities) of a user A includes: *Days of Being Wild, White Vengeance,* and *Forever Enthralled. Farewell My*

*Concubine* and *Days of Being Wild* are connected to one entity (an intermediate entity for short): Hong Kong movie and Zhang Guorong. *Farewell My Concubine* and *White Vengeance* have a common intermediate entity: History. *Farewell My Concubine* and *Forever Enthralled* have common intermediate entities: Chen Kaige and Peking Opera. That is, the first associated entity coincides with the second associated entity. The first relation includes a genre, a leading role, a genre, a director, and a type. The second relation includes a genre, a leading actor, a genre, a director, and a type. With reference to FIG. 6, it can be understood that FIG. 10 includes three pairing blocks. A first pairing block and a third pairing block each include two paths. A second pairing block includes one path. That is, five paths are included in FIG. 10.

A first path: *Farewell My Concubine-Genre-Hong* Kong movie-Genre-Days *of Being Wild.*

A second path: *Farewell My Concubine-Leading* actor-Zhang Guorong-Leading actor-Days *of Being Wild.*

A third path: *Farewell My Concubine*-Genre-History-Genre-*White Vengeance.*

A fourth path: *Farewell My Concubine*-Director-Chen Kaige-Director-Forever *Enthralled.*

A fifth path: *Farewell My Concubine-Type-Peking* Opera-Type-Forever *Enthralled.*

After the path is obtained, the first vector and the second vector in the path can be determined. The first vector is a vector of one end of the path (for example, the first recommendation entity) pointing to the intermediate entity. The second vector is a vector of the other end of the path (for example, the first historical entity) pointing to the intermediate entity. The intermediate entity can be understood as an entity adjacent to the first recommendation entity or an entity adjacent to the first historical entity. The intermediate entity is the first associated entity and/or the second associated entity. The first vector and the second vector may be multi-dimensional embeddings.

The foregoing example is still used. For the second path, the first vector may be a vector from *Farewell My Concubine* to Zhang Guorong. The second vector may be a vector from *Days of Being Wild* to Zhang Guorong. In this case, the intermediate entity is Zhang Guorong. It can be understood that the first vector may alternatively be a vector from *Days of Being Wild to* Zhang Guorong. The second vector may alternatively be a vector from *Farewell My Concubine* to Zhang Guorong. That is, for FIG. 10, a left flow direction is the first direction and a right flow direction is the second direction, or a left flow direction is the second direction and a right flow direction is the first direction. The following uses an example in which the left flow direction is the first direction and the right flow direction is the second direction as an example for schematic description.

Optionally, the first vector and the second vector can be computed by using the following formulas:

$$s_m^{left} = M_r \tau + r_m^{1st};$$

and

$$s_m^{right} = M_r i_u + r_m^{end}.$$

$s_m^{left}$ represents the first vector and $s_m^{right}$ represents the second vector, or $s_m^{left}$ represents the second vector and $s_m^{right}$ represents the first vector. $M_r$ represents a relation matrix between the to-be-recommended item and the item or the item attribute corresponding to the intermediate entity. $\tau$ represents an embedding vector of the to-be-recommended item. $r_m^{1st}$ represents an embedding vector of a relation between the to-be-recommended item and the item or the item attribute corresponding to the intermediate entity. $i_u$ represents an embedding vector of the historical item. $r_m^{end}$ represents an embedding vector of a relation between the historical item and the item or the item attribute corresponding to the intermediate entity. m is an integer greater than 0, and a value of m is the same as a quantity of paths. An example in which $s_m^{left}$ represents the first vector and $s_m^{right}$ represents the second vector is used below for description.

It can be understood that the first vector and the second vector can alternatively be computed by using another formula. This is not specifically limited herein.

The foregoing example in FIG. 10 is still used, a first vector of the first path is Embedding vector of *Farewell My Concubine*×Matrix of Genre+Embedding vector of Genre. A second vector of the first path is Embedding vector of *Days of Being Wild*×Matrix of Genre+Embedding vector of Genre. A first vector of the second path is Embedding vector of *Farewell My Concubine*×Matrix of Leading actor+Embedding vector of Leading actor. A second vector of the second path is Embedding vector of *Days of Being Wild*×Matrix of Leading actor+Embedding vector of Leading actor. A first vector of the third path is Embedding vector of *Farewell My Concubine*×Matrix of Genre+Embedding vector of Genre. A second vector of the third path is Embedding vector of *White Vengeance*×Matrix of Genre+Embedding vector of Genre. A first vector of the fourth path is Embedding vector of *Farewell My Concubine*×Matrix of Director+Embedding vector of Director. A second vector of the fourth path is Embedding vector of *Forever Enthralled*×Matrix of Director+Embedding vector of Director. A first vector of the fifth path is Embedding vector of *Farewell My Concubine*×Matrix of Type+Embedding vector of Type. A second vector of the fifth path is Embedding vector of *Forever Enthralled*×Matrix of Type+Embedding vector of Type. Mathematical expressions are as follows:

$$s_1^{left} = Farewell\ My\ Concubine \times \text{Matrix of Genre} + \text{Genre} ;$$

$$s_1^{right} = Days\ of\ Being\ Wild \times \text{Matrix of Genre} + \text{Genre};$$

$$s_2^{left} = Farewell\ My\ Concubine \times \text{Matrix of Leading actor} + \text{Leading actor} ;$$

$$s_2^{right} = Days\ of\ Being\ Wild \times \text{Matrix of Leading actor} + \text{Leading actor} ;$$

$$s_3^{left} = Farewell\ My\ Concubine \times \text{Matrix of Genre} + \text{Genre} ;$$

$$s_3^{right} = White\ Vengeance \times \text{Matrix of Genre} + \text{Genre} ;$$

$$s_4^{left} = Farewell\ My\ Concubine \times \text{Matrix of Director} + \text{Director} ;$$

$$s_4^{right} = Forever\ Enthralled \times \text{Matrix of Director} + \text{Director} ;$$

$$s_5^{left} = Farewell\ My\ Concubine \times \text{Matrix of Type} + \text{Type} ;$$

and

$$s_5^{right} = Forever\ Enthralled \times \text{Matrix of Type} + \text{Type} .$$

Step 8022: Separately compute a probability that the first vector and the second vector of each path are aggregated at one entity (which may also be referred to as the intermediate entity) included in each path.
After the first vector and the second vector of the path are determined, a probability that the first vector and the second vector coincide in a mapping relation between the first vector and the second vector (that is, the probability that the first vector and the second vector are aggregated) is computed. The probability can be abstracted as an embedding vector of a user dimension, and may reflect a preference degree of the user for the intermediate entity. The probability value can be used for indicating importance of each path.
It can be understood that, if a quantity of nodes of the path is an odd number, the intermediate entity is an intermediate node of the path. If a quantity of nodes of the path is an even number, the intermediate entity may be any one of two nodes in the middle of the path (generally, a node of two middle nodes that is closer to the to-be-recommended item is determined as the intermediate entity).
For example, eight of ten movies watched by the user are all cast by actor Zhang Guorong. In this case, there is a high probability that the path includes a node "Zhang Guorong".
Optionally, the probability that the first vector and the second vector of each path are aggregated at the intermediate entity may be computed by using the following formula:

$$p_m = \frac{\exp\left(s_m^{left} s_m^{right}\right)}{\sum_{m=1}^{M} \exp\left(s_m^{left} s_m^{right}\right)}.$$

$p_m$ represents the probability. $s_m^{left}$ represents the first vector. $s_m^{right}$ represents the second vector. exp represents an exponential function based on e. M is a positive integer. M represents a quantity of paths between the to-be-recommended item and items or item attributes in the history record of the user (for example, three Ms in FIG. 10 are respectively 2, 1, and 2). For an explanation for another parameter, refer to an explanation corresponding to the foregoing formula. Details are not described herein again.

It can be understood that the probability that the first vector and the second vector are aggregated at the same intermediate entity can alternatively be computed by using another formula. This is not specifically limited herein.

For example, with reference to FIG. 6, the foregoing example in FIG. 10 is still used. Computing is performed on information flowing from *Farewell My Concubine* to the "Zhang Guorong" node through the leading actor of the movie in a pairing block 1. Computing is performed on information flowing from the movie *Days of Being Wild* watched by the user to the "Zhang Guorong" node through the leading actor of the movie. A probability that information in the two flow directions is aggregated on the node "Zhang Guorong" is computed.

Mathematical expressions of a probability $p_1$ that the first vector and the second vector are aggregated at a Hong Kong movie are as follows:

$$p_1 = \frac{\exp\left(s_1^{left} s_1^{right}\right)}{\sum \exp\left(s_m^{left} s_m^{right}\right)};$$

and

$$\sum \exp\left(s_m^{left} s_m^{right}\right) = \exp\left(s_1^{left} s_1^{right}\right) + \exp\left(s_2^{left} s_2^{right}\right) + \exp\left(s_3^{left} s_3^{right}\right) \\ + \exp\left(s_4^{left} s_4^{right}\right) + \exp\left(s_5^{left} s_5^{right}\right);$$

or

$$\sum \exp\left(s_m^{left} s_m^{right}\right) = \exp\left(s_1^{left} s_1^{right}\right) + \exp\left(s_2^{left} s_2^{right}\right).$$

Optionally, a denominator is similar to a description corresponding to FIG. 6. The denominator may be a sum of probabilities of m paths in n pairing blocks (that is, a quantity of probabilities of denominators may be n×m), or may be a sum of probabilities of m paths in one pairing block (that is, a quantity of probabilities of denominators may be m). This is not specifically limited herein. Because the example in FIG. 10 is only a part of the path, in a case in which one pairing block has only one path, the probability is inaccurate. Therefore, in this step, an example in which the sum of probabilities of all the paths is used for computing the denominator of the probability is used for schematic description.

A mathematical expression of a probability $p_2$ that the first vector and the second vector are aggregated at Zhang Guorong is as follows:

$$p_2 = \frac{\exp\left(s_2^{left} s_2^{right}\right)}{\sum \exp\left(s_m^{left} s_m^{right}\right)}.$$

A mathematical expression of a probability $p_3$ that the first vector and the second vector are aggregated at History is as follows:

$$p_3 = \frac{\exp\left(s_3^{left} s_3^{right}\right)}{\sum \exp\left(s_m^{left} s_m^{right}\right)}.$$

A mathematical expression of a probability $p_4$ that the first vector and the second vector are aggregated at Chen Kaige is as follows:

$$p_4 = \frac{\exp\left(s_4^{left} s_4^{right}\right)}{\sum \exp\left(s_m^{left} s_m^{right}\right)}.$$

A mathematical expression of a probability $p_5$ that the first vector and the second vector are aggregated at Peking Opera is as follows:

$$p_5 = \frac{\exp\left(s_5^{left} s_5^{right}\right)}{\sum \exp\left(s_m^{left} s_m^{right}\right)}.$$

The probability that the first vector and the second vector are aggregated at the same intermediate entity is computed, that is, the explanation for the to-be-recommended item is obtained. For example, the foregoing example is still used. The explanation may include: explanation 1: a path attribute node (Hong Kong movie) corresponding to $p_1$, and explanation 2: a path attribute node (Zhang Guorong) corresponding to $p_2$.

Step 8023: Determine a feedback embedding vector of the user based on the probability and an embedding vector corresponding to the intermediate entity.

Optionally, after the probability that the first vector and the second vector are aggregated at the same intermediate entity is computed, the feedback embedding vector of the user can be determined based on the probability and the embedding vector corresponding to the intermediate entity. In other words, feature values including user preferences in each group can be first summarized as the feedback embedding vector of the user.

Optionally, the feedback embedding vector of the user can be computed by using the following formulas:

$$c_n = \sum_{m=1}^{M} e_m p_m, n \in [1, N];$$

and

$$u = \sum_{n=1}^{N} c_n.$$

$c_n$ represents a feedback embedding vector of the to-be-recommended item and an $n^{th}$ historical item in one pairing block. $e_m$ represents the embedding vector of the intermediate entity. $p_m$ represents a probability that a left vector and a right vector are aggregated at a same intermediate entity. u represents the feedback embedding vector of the user. N is an integer greater than 1. N represents a quantity of historical items.

It can be understood that the feedback embedding vector of the user can alternatively be computed by using another formula. This is not specifically limited herein.

For example, the foregoing example in FIG. 10 is still used.

$$c_1 = e_1 p_1 + e_2 p_2;$$

$$c_2 = e_3 p_3;$$

$$c_3 = e_4 p_4 + e_5 p_5 \, ;$$

and

$$u = \sum_{n=1}^{N} c_n = c_1 + c_2 + c_3 \, .$$

$e_1$ is an embedding vector corresponding to the Hong Kong movie. $e_2$ is an embedding vector corresponding to Zhang Guorong. $e_3$ is an embedding vector corresponding to History. $e_4$ is an embedding vector corresponding to Chen Kaige. $e_5$ is an embedding vector corresponding to Peking Opera. For an explanation for another parameter, refer to the explanation corresponding to the foregoing formula. Details are not described herein again.

In other words, an entity node with semantics in the path can be used to describe potential preferences of the user (for example, a name of the leading actor of a movie, a genre of a movie, or a name of a movie director). An operation (for example, multiplication) is performed on embedding vectors of these attribute nodes and a probability corresponding to a path, so that feedback information of a single path can be obtained.

For example, the foregoing example in FIG. 10 is still used. After the probability is obtained, feedback information may be generated based on the probability. The feedback information may include: Feedback information 1= $p_1$ ×Embedding vector of Hong Kong movie in embedding space, and Feedback information 2= $p_2$ ×embedding vector of Zhang Guorong in the embedding space, and the like.

Step 8024: Compute a distance between an embedding vector corresponding to the to-be-recommended item and the feedback embedding vector, to obtain a score of the to-be-recommended item.

Optionally, the distance between the embedding vector corresponding to the to-be-recommended item and the feedback embedding vector may alternatively be computed, to obtain the score of the to-be-recommended item.

In this embodiment of this application, the distance between the embedding vector corresponding to the to-be-recommended item and the feedback embedding vector may be computed by using a method such as a vector dot product, a cosine value, or a similarity method. The following uses the vector dot product as an example.

Optionally, the distance between the embedding vector corresponding to the to-be-recommended item and the feedback embedding vector can be computed by using the following formula:

$$\hat{y} = f(u, \tau) = \sigma\!\left(u^T \cdot \tau\right) \cdot$$

$\hat{y}$ represents the score. $\tau$ represents the embedding vector of the to-be-recommended item. $\sigma$ is an activation function. $u^T$ represents a transposed matrix corresponding to the feedback embedding vector u of the user. • represents an inner product operation.

It can be understood that the distance between the embedding vector corresponding to the to-be-recommended item and the feedback embedding vector can alternatively be computed by using another formula. This is not specifically limited herein.

Optionally, the activation function may be a SIGMOID function, and is used to limit the score within [0, 1].

A smaller score indicates that the to-be-recommended item is closer to the feedback embedding vector of the user, and indicates that the user likes the to-be-recommended item more.

For ease of understanding, the following uses an embedding vector dimension of 10 and a computing manner of inner product of vectors as an example to describe the foregoing score computing process: If a movie set {*Farewell My Concubine, Tiny Times, Interstellar*} is recommended, and the recommendation network completes computing performed on weight of training embedding vector, the following embedding vectors are computed:

A feedback embedding vector of the user A is [0.6626494, 0.5364959, -0.05639589, 0.621532, 0.59782714, 0.44225037, -0.5474265, 0.589441, 0.39717668, 0.16018206].

An embedding vector of *Farewell My Concubine* is [1.2724952, 0.44506034, 0.12865402, 1.6125565, 1.03306697, -0.01394547, -0.6698308, 0.6348874, 0.4119322, 0.071924224].

An embedding vector of *Tiny Times* is [-0. 00414435, 0.0892299, -0.004835337, 0.8153024, 0.37877557, -0.096624255, -0.34244198, 0.44271728, 0.42087126, 0.5350623].

An embedding vector of *Interstellar* is [0.008653568, 0.2210477, -0.04570025, 0.640234, 0.38816172, -0.13182494, -0.48932806, 0.56698304, 0.6465809, 0.8148861].

Score computing results are as follows:

Inner product (user A, *Farewell My Concubine): 3.604461848204668.
Inner product (user A, *Tiny Times*): 1.437129814068635.
Inner product (user A, *Interstellar*): 1.6879938602873226.
Values output after the activation function (that is, recommendation scores):
A *Farewell My Concubine:* 0.9735182781851668.
A *Tiny Times:* 0.8080097931691103.
An *Interstellar*: 0.8439601507627418.

Step 8025: Determine the recommended item based on the score of the to-be-recommended item.

After the score of the to-be-recommended item is obtained, the score is selected in descending order based on a requirement of TOP K, to obtain the recommended item.

Optionally, after the scores of the to-be-recommended items are obtained, the to-be-recommended items can be ranked based on scores. If Top 5 are selected, to-be-recommended items with scores ranked in the first 5 are selected from the recommended movie set as the recommended items, and are displayed to the user.

For example, the foregoing example is still used. For the user A, the recommended items are ranked as *Farewell My Concubine, Interstellar*, and *Tiny Times.* If top 1 is selected, *Farewell My Concubine* is the recommended item.

Step 8026: Obtain an explanation for the recommended item or the to-be-recommended item based on the probability. This step is optional.

After the probability of the path is obtained, the probability may be abstracted into the embedding vector of the user dimension, and the probability is output (for example, the explanation for the to-be-recommended item or the recommended item). This can reflect the preference degree of the user for the intermediate entity. A value of the probability can be used for indicating the importance of each path.

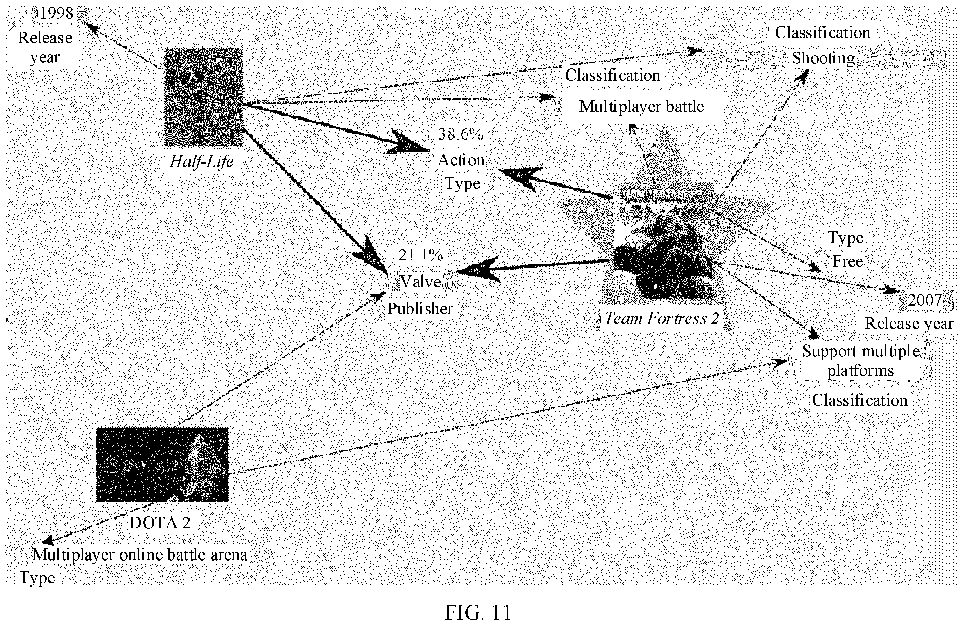

Optionally, the explanation for the recommended item or the to-be-recommended item may alternatively be displayed in a graph. The graph shown in FIG. 11 is obtained by using the foregoing game recommendation scenario and the related example. For a background description of the game recommendation scenario, refer to Table 1.

Table **1**

| Name of a destined game recommended for the user A | *Team Fortress 2* (*Team Fortress* 2) |
|---|---|
| Name of a game played by the user A | *Half-Life*, *DOTA 2,* or the like |
| Relation attribute in the knowledge graph | Game type, game publisher, game attribute, or the like |
| Attribute entity node in the knowledge graph | Action, 1998, free, or the like |

As shown in FIG. 11, a degree to which the user A likes Valve company is 21.1%, and a degree to which the user A likes an action type game is 38.6%, and the like. Therefore, two key factors for recommending the game *Team Fortress* 2 are that *Team Fortress 2* and the game *Half-Life* that is played by the user are both developed by the Valve company, and that the game type is action type. When a game has both of such attributes (Valve, action type), the preference degree of the user A will increase.

Optionally, the explanation may be the probability, or may be the description of the associations between the entities at the two ends indicated by the one or more paths in the obtained recommendation result.

For example, the foregoing example is still used. If *Farewell My Concubine* is very close to *Days of Being Wild* in the embedding space, the following explanation statement may be generated: "A movie *Farewell My Concubine* is recommended to the user because the movie *Farewell My Concubine* is very similar to the movie *Days of Being Wild* that is watched by the user, and both of them are cast by the star Zhang Guorong.

Step 8027: Evaluate accuracy of the recommended item based on the score. This step is optional.

Optionally, after the score of the recommended item is obtained, the accuracy of the recommended item may be evaluated based on the score. Alternatively, it can be understood that accuracy of the recommendation network is evaluated based on the score.

In this embodiment of this application, the accuracy of the recommended item is evaluated based on the score in a plurality of manners, which are separately described below.

1. Precision (precision) (that is, the foregoing recommendation precision)

The precision is computed as described above. Recommendation precision=Quantity of pieces of correct recommended information/Quantity of pieces of recommended information.

A specific process is as follows: Historical items watched by the user are divided into a training set and a test set without repetition. The training set is used for the training method in an embodiment shown in FIG. 5, and the test set is used for the recommendation method in the embodiment shown in FIG. 6. In addition, the precision of the recommended item is obtained through computing based on the quantity of pieces of correct recommended information (that is, correct to-be-recommended items in Top K, where K is an integer greater than 0, K=1 indicates that a to-be-recommended item with a highest score is output, and K=5 indicates that five to-be-recommended items with scores ranking highest are recommended items) and the quantity of pieces of recommended information (that is, a quantity of K).

For example, there are 40 historical items watched by the user, where the training set includes 30 historical items, and the test set includes 10 historical items. 100 to-be-recommended items are input to the recommendation network. If four recommended items in Top 5 items that are recommended are historical items watched by the user, the precision=4/5=0.8.

2. Recall (recall) (that is, the foregoing recommendation recall)

The recall is computed as described above. Recall=Quantity of pieces of correct recommended information/Quantity of pieces of information in a sample.

For example, the foregoing example of computing the precision is still used. The recall is 4/10=0.4.

3. AUC

A specific description of the AUC is described above, and an area under a ROC curve is computed. It mainly evaluates correctness of a single recommended item and whether overfitting occurs, and determines whether the single recommended item is "true positive" or "false positive" by using a binary classifier and a threshold.

For example, the threshold is 0.5. If an output result of the recommended item in the binary classifier is 0.7, that is, greater than the threshold, the recommended item is correct. If an output result of the recommended item in the binary classifier is 0.3, that is, less than the threshold, the recommended item is incorrect.

It can be understood that the foregoing three manners of evaluating the recommendation network are merely examples. In actual application, the accuracy of the recommended item can be evaluated in another manner (for example, accuracy). This is not specifically limited herein.

The evaluation manner in embodiments of this application may be applied to a training phase of the recommendation network (for example, the training method shown in FIG. 5), or may be applied to an inference phase of the recommendation network (for example, the recommendation method shown in FIG. 6). This is not specifically limited herein.

To more intuitively see recommendation accuracy of the recommendation network provided in embodiments of this application, an existing recommendation model is compared with TB-Net in embodiments of this application.

The existing recommendation model includes a ripple net (ripple net) recommendation model, a collaborative knowledge base embedding (collaborative knowledge base embedding, CKE) recommendation network, a bayesian personalized ranking matrix factorization (bayesian personalized ranking matrix factorization, BPRMF) recommendation algorithm, a neural factorization machine (neural factorization machine, NFM) recommendation algorithm, a deep knowledge-aware network (deep knowledge-aware network, DKN), and a recommendation model of Wide&Deep (Wide&Deep).

1. Comparison results in metrics of the precision and the recall

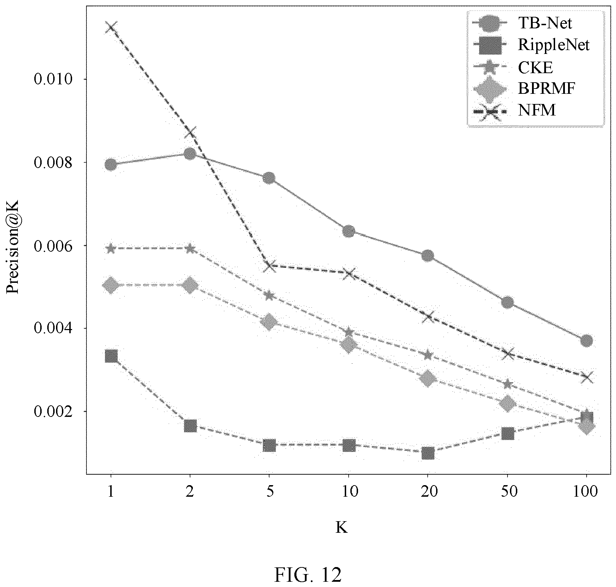

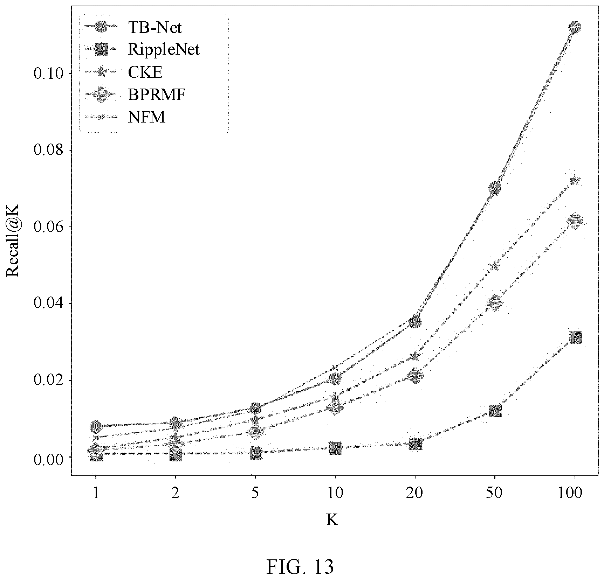

For a comparison result in the precision (precision), refer to FIG. 12. For a comparison result in the recall (recall), refer to FIG. 13.

The comparison results are obtained when the TB-Net provided in this application and four mainstream models (the ripple net, the CKE, the BPRMF, and the NFM) are used for training news recommendation dataset: MIND (Microsoft news dataset), to complete a task of recommending news. The metrics of the precision and the recall are used for measuring the accuracy of the recommended item. It can be learned from the comparison results of FIG. 12 and FIG. 13 that, in the precision and the recall, performance of the TB-Net provided in this application is good, and is better than performance of other mainstream models (the ripple net, the CKE, and the BPRMF). The comparison results prove that, compared with the existing recommendation system (the ripple net, the CKE, and the BPRMF), the TB-Net provided in embodiments of this application significantly improves recommendation accuracy.

2. Comparison results in metrics of AUC and the accuracy.

Table 2 shows the comparison results in the metrics of the AUC and the accuracy.

**Table 2**

| Recommendation model | Movie recommendation | | Game recommendation | | News recommendation | |
|---|---|---|---|---|---|---|
| | AUC | Accuracy | AUC | Accuracy | AUC | Accuracy |
| TB-Net | 0.9015 | 0.8215 | 0.8322 | 0.7549 | 0.9193 | 0.8588 |
| ripple net | 0.9007 | 0.8209 | 0.8085 | 0.7254 | 0.9016 | 0.8405 |
| CKE | 0.796 | 0.739 | - | - | - | - |
| DKN | 0.655 | 0.589 | 0.5921 | 0.5504 | 0.6017 | 0.5712 |
| Wide&Deep | 0.9001 | 0.8202 | 0.8136 | 0.7369 | 0.9106 | 0.8511 |

It can be learned from the comparison results in Table 2 that, in the metrics of the AUC the recommended accuracy, the recommendation network (that is, the TB-Net) in embodiments of this application is better than the conventional technology, y is basically equal to an industry-leading deep learning recommendation model (the ripple net launched by Microsoft and the Wide&Deep launched by Google), and is improved to a specific degree. The recommendation network provided in embodiments of this application features high recommendation accuracy.

Step 8028: Evaluate accuracy of the explanation based on the probability and the knowledge graph. This step is optional.

Optionally, after the probability corresponding to the path is obtained, ranking may be performed based on a value of the probability; and the accuracy of the explanation for the to-be-recommended item or the recommended item is evaluated based on the ranking and degree (degree) ranking of subgraph nodes in the knowledge graph. A degree of a node refers to a quantity of edges (that is, a quantity of connected relations) associated with the node.

For example, if the explanation corresponds to Top 2, two of $p_2$ (that is, a probability corresponding to the second path in which Zhang Guorong is located) and $p_4$ (that is, a probability corresponding to the fourth path in which Chen Kaige is located) with high probabilities in the path are used. Top two nodes ranking in the degree ranking in the knowledge graph are respectively the Zhang Guorong node and the Peking Opera node. In other words, both the probability $p_2$ corresponding to Zhang Guorong and the Zhang Guorong node rank in the top two in the degree ranking in knowledge graph, and the probability $p_4$ corresponding to Chen Kaige and the Chen Kaige node do not rank in the top two in the degree ranking in knowledge graph. It indicates that an explanation for the second path in which Zhang Guorong is located is accurate, and an explanation for the fourth path in which Chen Kaige is located is not accurate compared with the explanation corresponding to Zhang Guorong.

To more intuitively see the accuracy of the explanation output by the recommendation network provided in embodiments of this application, comparison is performed on explanations corresponding to the existing recommendation explanation model and the recommendation network in embodiments of this application in the movie recommendation scenario (MovieLens dataset). The recommendation network provided in embodiments of this application may also be referred to as a tower-bridge net (tower-bridge net, TB-Net), or referred to as a bidirectional significant explainable recommendation network.

The existing recommendation explanation model includes a ripple net (ripple net) recommendation model, an attentive multitask collaborative filtering (attentive multitask collaborative filtering, AMCF) model, and an interpretable linear regression model (interpretable linear regression model, LR).

Table 3 shows a comparison result of the explanations.

**Table 3**

| Recommendation explanation model | Top1@3 | Top3@5 |
|---|---|---|
| AMCF | 0.461 | 0.403 |
| LR | 0.572 | 0.598 |
| Ripple net | 0.26 | 0.21 |
| TB-Net | 0.75 | 0.635 |

A recall of the explanation is equivalent to TopG@K. K indicates a quantity of explanations output by a recommendation model. G indicates a quantity of explanations that are recognized by the user and that rank in front in a dataset. For example, Top1@3 indicates a probability that a first explanation in the dataset exists in three explanations output by the recommendation model, which is equivalent to determining, by using user feedback, whether an explanation for the recommended item output by the recommendation model meets a real expectation of the user.

The comparison result proves that, compared with the existing recommendation explanation model (the ripple net, the AMCF, and the LR), the TB-Net provided in embodiments of this application significantly improves accuracy of output explanation information. The recommendation network provided in embodiments of this application features both high interpretability and high recommendation accuracy, that is, providing a semantic explanation while maintaining the high recommendation accuracy.

In this embodiment of this application, a time sequence relation is not limited in each step shown in FIG. 9. For example, the step 8026 can be performed before the step 8025, or can be performed before the step 8024, ensuring that the step 8026 is performed after the step 8022. The step 8027 can be performed before the step 8026, or can be performed before the step 8025, ensuring that the step 8027 is performed after the step 8024. The step 8028 can be performed before the step 8027.

It can be understood that, if the recommendation network outputs only the explanation for the to-be-recommended item, steps shown in FIG. 9 may include the step 8021, the step 8022, and the step 8026. If the recommendation network outputs only the recommended item, steps shown in FIG. 9 may include the step 8021 to the step 8025.

In a possible implementation, steps of obtaining the recommendation result based on the plurality of paths may include the step 8021 to the step 8025. In another possible implementation, steps of obtaining the recommendation result based on the plurality of paths may include the step 8021 to the step 8026. In another possible implementation, steps of obtaining the recommendation result based on the plurality of paths may include the step 8021 to the step 8027. In another possible implementation, steps of obtaining the recommendation result based on the plurality of paths may include the step 8021 to the step 8028.

In embodiments of this application, in one aspect, the high-semantic explanation information can be provided for the to-be-recommended item or the recommended item through the bidirectional propagation computing, and can be grafted with the recommendation system in the conventional technology, that is, the high-semantic explanation information can be provided for a recommended item output by the existing recommendation system. In another aspect, the overlap probability of information in the left and right flow directions in the path aggregated at the intermediate entity is computed at the aggregation point (namely, the intermediate entity), to indicate importance of the path. In another aspect, preference feedback information of the user (that is, the feedback embedding vector of the user) can be obtained by computing the overlap probability and the intermediate entity. The feedback embedding vector is used for outputting a trustworthy and reliable semantic explanation. In another aspect, the preference feedback information at two ends of the path can be aggregated to form the feedback embedding vector, and the feedback embedding vector and the to-be-recommended item are computed to output the recommended item, to obtain the more accurate recommendation result, that is, to improve the recommendation recall.

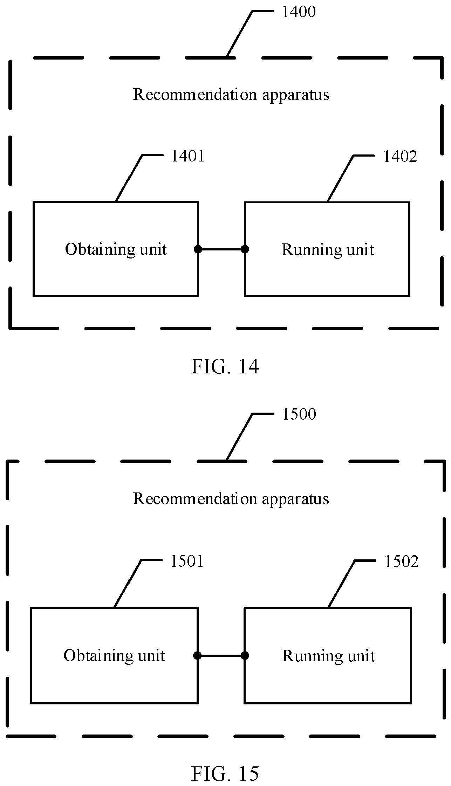

The recommendation method in embodiments of this application is described above. Recommendation apparatuses in embodiments of this application are described below. A neural network is equivalent to the foregoing recommendation network. As shown in FIG. 14, an embodiment of a recommendation apparatus 1400 in embodiments of this application includes:

an obtaining unit 1401, configured to obtain a knowledge graph, where the knowledge graph includes a plurality of first entities indicating an item and a plurality of second entities indicating an item attribute; and
a running unit 1402, configured to run a neural network based on the knowledge graph and information of a user, to obtain a recommendation result, where the information of the user indicates an item or an item attribute in a history record of the user; the recommendation result includes a recommended item; and the neural network is configured to perform computing based on at least one first direction and at least one second direction in the knowledge graph to obtain the recommendation result, where the first direction starts from a first entity indicating the recommended item or a to-be-recommended item, and the second direction starts from a first entity indicating the item in the history record of the user, or the second direction starts from a second entity indicating the item attribute in the history record of the user.

In this embodiment, operations performed by units in the recommendation apparatus are similar to those described in embodiments shown in FIG. 5, FIG. 8, and/or FIG. 9. Details are not described herein again.

In this embodiment, the running unit 1402 can run the neural network based on the knowledge graph and the information of the user, to obtain the recommendation result. The neural network is configured to perform computing based on the at least one first direction and the at least one second direction in the knowledge graph to obtain the recommendation result. Therefore, a new recommendation method is provided.

As shown in FIG. 15, another embodiment of a recommendation apparatus 1500 in embodiments of this application includes:

an obtaining unit 1501, configured to obtain a knowledge graph, a first identifier, and a second identifier, where the knowledge graph includes a plurality of first entities indicating an item and a plurality of second entities indicating an item attribute, the first identifier indicates a to-be-recommended item, the second identifier indicates an item or an item attribute in a history record of a user, and the knowledge graph includes a first entity corresponding to the first identifier and a first entity or a second entity corresponding to the second identifier; and

a running unit 1502, configured to run a neural network based on the knowledge graph, the first identifier, and the second identifier, to obtain an evaluation result, where the evaluation result includes a probability that the to-be-recommended item is recommended; the neural network is configured to perform computing based on at least one first direction and at least one second direction in the knowledge graph, to obtain the evaluation result; and the first direction starts from the first entity corresponding to the first identifier, and the second direction starts from the first entity or the second entity corresponding to the second identifier.

In this embodiment, operations performed by units in the recommendation apparatus are similar to those described in embodiments shown in FIG. 5, FIG. 8, and/or FIG. 9. Details are not described herein again.

In this embodiment, the running unit 1502 can run the neural network based on, the first identifier, and the second identifier, to obtain the evaluation result. The neural network is configured to perform computing based on the at least one first direction and the at least one second direction in the knowledge graph, to obtain the probability that the to-be-recommended item is recommended. The probability can be used to output an explanation for the to-be-recommended item, thereby providing an explanatory recommendation method.

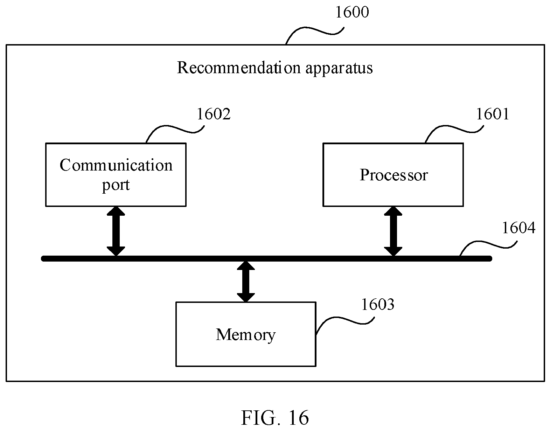

As shown in FIG. 16, another embodiment of a recommendation apparatus 1600 in embodiments of this application includes but is not limited to a processor 1601, a communication port 1602, a memory 1603, and a bus 1604. In this embodiment of this application, the processor 1601 is configured to control an action of the recommendation apparatus 1600.

In addition, the processor 1601 may be a central processing unit, a general-purpose processor, a digital signal processor, an application-specific integrated circuit, a field programmable gate array or other programmable logic devices, a transistor logic device, a hardware component, or any combination thereof. The processor may implement or perform various example logical blocks, modules, and circuits described with reference to content disclosed in this application. The processor may be a combination of processors implementing a computing function, for example, a combination of one or more microprocessors, or a combination of a digital signal processor and a microprocessor. It may be clearly understood by persons skilled in the art that, for the purpose of convenient and brief description, for a detailed working process of the foregoing system, apparatus, and unit, refer to a corresponding process in the foregoing method embodiments, and details are not described herein again.

It should be noted that the recommendation apparatus shown in FIG. 16 may be specifically configured to implement functions of steps performed by the recommendation apparatus in method embodiments corresponding to FIG. 5, FIG. 8, and/or FIG. 9, and implement technical effects corresponding to the recommendation apparatus. For a specific implementation of the recommendation apparatus shown in FIG. 16, refer to descriptions in the method embodiments corresponding to FIG. 5, FIG. 8, and/or FIG. 9. Details are not described herein again.

An embodiment of this application further provides a computer-readable storage medium that stores one or more computer-executable instructions. When the computer-executable instruction is executed by a processor, the processor performs a method according to possible implementations in the foregoing embodiments. The recommendation apparatus may specifically perform steps in method embodiments corresponding to FIG. 5, FIG. 8, and/or FIG. 9.

An embodiment of this application further provides a computer program product that stores one or more computers. When the computer program product is run by a processor, the processor performs a method in the foregoing possible implementations. The recommendation apparatus may specifically perform steps in method embodiments corresponding to FIG. 5, FIG. 8, and/or FIG. 9.

An embodiment of this application provides a chip system. The chip system includes a processor, configured to support a recommendation apparatus in implementing functions in the foregoing possible implementations of the recommendation apparatus. In a possible design, the chip system further includes a memory. The memory is configured to store program instructions and data that are necessary for a recommendation apparatus. The chip system may include a chip, or may include a chip and another discrete device. The recommendation apparatus may specifically perform steps in method embodiments corresponding to FIG. 5, FIG. 8, and/or FIG. 9.

In several embodiments provided in this application, it should be understood that the disclosed system, apparatus, and method can be implemented in other manners. For example, the described apparatus embodiment is merely an example. For example, division into the units is merely logical function division and may be other division in actual implementation. For example, a plurality of units or components may be combined or integrated into another system, or some features may be ignored or may not be performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store the program code, such as a USB flash drive, a removable hard disk, a read-only memory (read-only memory, ROM), a random access memory (random access memory, RAM), a magnetic disk, or an optical disc.

**Claims**

1. A recommendation method, wherein the method comprises:

   obtaining a knowledge graph, wherein the knowledge graph comprises a plurality of first entities indicating an item and a plurality of second entities indicating an item attribute; and
   running, based on the knowledge graph and information of a user, a neural network to obtain a recommendation result, wherein the information of the user indicates an item or an item attribute in a history record of the user; the recommendation result comprises a recommended item; and the neural network is configured to perform computing based on at least one first direction and at least one second direction in the knowledge graph to obtain the recommendation result, wherein the first direction starts from a first entity indicating the recommended item or a to-be-recommended item, and the second direction starts from a first entity indicating the item in the history record of the user, or starts from a second entity indicating the item attribute in the history record of the user.

2. The method according to claim 1, wherein the recommendation result further comprises an explanation for the recommended item, and the explanation is associated with one first direction and one second direction.

3. The method according to claim 1, wherein the running, based on the knowledge graph and information of a user, a neural network to obtain a recommendation result comprises:

   extracting, based on the knowledge graph and the information of the user, a plurality of paths from the knowledge graph, wherein each path indicates an association between entities at two ends of the path, one end of each path corresponds to the to-be-recommended item, and the other end of each path corresponds to the item or the item attribute in the history record of the user; and
   inputting the plurality of paths into the neural network to score a plurality of to-be-recommended items, so that the neural network obtains the recommendation result, wherein the neural network is configured to perform computing based on a first direction and a second direction of each of the plurality of paths to obtain the recommendation result; and for one path, the first direction is a direction in which one end of the path points to the other end of the path, and the second direction is a direction in which the other end of the path points to one end of the path.

4. The method according to claim 1, wherein the running, based on the knowledge graph and information of a user, a neural network to obtain a recommendation result comprises:

   inputting the knowledge graph and the information of the user into the neural network;
   extracting, by the neural network based on the knowledge graph and the information of the user, a plurality of paths from the knowledge graph, wherein each path indicates an association between entities at two ends of the path, one end of each path corresponds to the to-be-recommended item, and the other end of each path corresponds to the item or the item attribute in the history record of the user; and
   scoring, based on the first direction and the second direction of each of the plurality of paths, a plurality of to-be-recommended items, so that the neural network obtains the recommendation result, wherein for one path, the first direction is a direction in which one end of the path points to the other end of the path, and the second direction is a direction in which the other end of the path points to one end of the path.

5. The method according to claim 4, wherein the first direction is consistent with a direction of a first vector; the second direction is consistent with a direction of a second vector; and for one path, the first vector is a vector pointing from the first entity that is in the path and that indicates the to-be-recommended item to an entity that is in the path and that is adjacent to the first entity indicating the to-be-recommended item, and the second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user; and

the scoring, based on a first direction and a second direction of each of the plurality of paths, a plurality of to-be-recommended items corresponding to the plurality of paths, so that the neural network obtains the recommendation result comprises:

for each of the plurality of paths, scoring, based on a probability that the first vector and the second vector of each path are aggregated at one entity in each path, the to-be-recommended item corresponding to each path, to obtain the recommended item.

6. The method according to any one of claims 3 to 5, wherein the method further comprises:
separately scoring the plurality of paths based on the first direction and the second direction of each of the plurality of paths, to obtain an explanation for the recommendation result, wherein the explanation is a description of an association between entities at two ends indicated by the one or more paths in the obtained recommendation result.

7. The method according to claim 6, wherein the first direction is consistent with the direction of the first vector; the second direction is consistent with the direction of the second vector; and for the one path, the first vector is the vector pointing from the first entity that is in the path and that indicates the to-be-recommended item to the entity that is in the path and that is adjacent to the first entity indicating the to-be-recommended item, and the second vector is the vector pointing from the first entity that is in the path and that indicates the item in the history record of the user to the entity that is in the path and that is adjacent to the first entity indicating the item in the history record of the user; or the second vector is the vector pointing from the second entity that is in the path and that indicates the item attribute in the history record of the user to the entity that is in the path and that is adjacent to the second entity indicating the item attribute in the history record of the user; and

the scoring the plurality of paths based on the first direction and the second direction of each of the plurality of paths, to obtain an explanation for the recommendation result comprises:

separately computing a probability that the first vector and the second vector of each path are aggregated at one entity comprised in each path, to obtain the explanation for the recommendation result.

8. The method according to claim 7, wherein the separately computing a probability that the first vector and the second vector of each path are aggregated at one entity comprised in each path comprises:

$$p_m = \frac{\exp\left(s_m^{left} s_m^{right}\right)}{\sum_{m=1}^{M} \exp\left(s_m^{left} s_m^{right}\right)},$$

wherein

$p_m$ represents the probability; $s_m^{left}$ represents the first vector, and $s_m^{right}$ represents the second vector; or $s_m^{right}$ represents the first vector, and $s_m^{left}$ represents the second vector; exp represents an exponential function based on e; and M is a positive integer and M represents a quantity of paths between the to-be-recommended item and items or item attributes in the history record of the user.

9. The method according to any one of claims 1 to 8, wherein the neural network is obtained by training the neural network by using a training sample as an input of the neural network and a loss function value less than a threshold as an objective, the training sample comprises a plurality of training paths, or the training sample comprises the knowledge graph for training and the item and/or the item attribute in the history record of the user for training, each training path indicates the association between entities at the two ends of the training path, and the two ends of each training path corresponds to the item or the item attribute in the history record of the user; and

the loss function comprises a first loss function, the first loss function indicates a difference between the recommendation result output by the neural network and a target result, and the target result is related to the item or the item attribute in the history record of the user.

10. The method according to claim 9, wherein the loss function further comprises a second loss function, the second loss function indicates a difference between an embedding vector of a first training vector and an embedding vector of a second training vector in the training path of the knowledge graph for training, and two ends of the training path corresponds to the item or the item attribute in the history record of the user.

11. The method according to claim 10, wherein the loss function further comprises a third loss function, and the third loss function indicates a difference between a computed embedding vector of the first entity and a real embedding vector of the first entity, and/or the third loss function indicates a difference between a computed embedding vector of the second entity and a real embedding vector of the second entity.

12. A recommendation method, wherein the method comprises:

obtaining a knowledge graph, a first identifier, and a second identifier, wherein the knowledge graph comprises a plurality of first entities indicating items and a plurality of second entities indicating item attributes, the first identifier indicates a to-be-recommended item, the second identifier indicates an item or an item attribute in a history record of a user, and the knowledge graph comprises a first entity corresponding to the first identifier and a first entity or a second entity corresponding to the second identifier; and

running, based on the knowledge graph, the first identifier, and the second identifier, a neural network, to obtain an evaluation result, wherein the evaluation result comprises a probability that the to-be-recommended item is recommended; the neural network is configured to perform computing based on at least one first direction and at least one second direction in the knowledge graph, to obtain the evaluation result; and the first direction starts from the first entity corresponding to the first identifier, and the second direction starts from the first entity or the second entity corresponding to the second identifier.

13. The method according to claim 12, wherein the evaluation result further comprises a probability corresponding to a path in the knowledge graph based when the to-be-recommended item is recommended, one end of the path is the first entity corresponding to the first identifier, and the other end of the path is the first entity corresponding to the second identifier.

14. The method according to claim 12, wherein the running, based on the knowledge graph, the first identifier, and the second identifier, a neural network, to obtain an evaluation result comprises:

extracting a plurality of paths from the knowledge graph based on the knowledge graph, the first identifier, and the second identifier, wherein each path indicates an association between entities at two ends of the path, one end of each path corresponds to the to-be-recommended item, and the other end of each path corresponds to the item or the item attribute in the history record of the user; and

inputting the plurality of paths into the neural network to score a plurality of to-be-recommended items, so that the neural network obtains the evaluation result, wherein the neural network is configured to perform computing based on a first direction and a second direction of each of the plurality of paths to obtain the probability; and for one path, the first direction is a direction in which one end of the path points to the other end of the path, and the second direction is a direction in which the other end of the path points to one end of the path.

15. The method according to claim 13, wherein the running, based on the knowledge graph, the first identifier, and the second identifier, a neural network, to obtain an evaluation result comprises:

inputting the knowledge graph, the first identifier, and the second identifier into the neural network; and

extracting, by the neural network based on the knowledge graph, the first identifier, and the second identifier, a plurality of paths from the knowledge graph, wherein each path indicates an association between entities at two ends of the path, one end of each path corresponds to the to-be-recommended item, and the other end of each path corresponds to the item or the item attribute in the history record of the user; and

scoring, based on the first direction and the second direction of each of the plurality of paths, a plurality of to-be-recommended items corresponding to the plurality of paths, so that the neural network obtains the evaluation result, wherein for one path, the first direction is a direction in which one end of the path points to the other end of the path, and the second direction is a direction in which the other end of the path points to one end of the path.

16. The method according to claim 15, wherein the first direction is consistent with a direction of a first vector; the second direction is consistent with a direction of a second vector; and for one path, the first vector is a vector pointing from the first entity that is in the path and that indicates the to-be-recommended item to an entity that is in the path and that is adjacent to the first entity indicating the to-be-recommended item, and the second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user; and

the scoring, based on the first direction and the second direction of each of the plurality of paths, a plurality of to-be-recommended items corresponding to the plurality of paths comprises:
separately computing the probability that the first vector and the second vector of each path are aggregated at one entity comprised in each path.

17. The method according to claim 16, wherein the separately computing the probability that the first vector and the second vector of each path are aggregated at one entity comprised in each path comprises:

$$p_m = \frac{\exp\left(s_m^{left} s_m^{right}\right)}{\sum_{m=1}^{M} \exp\left(s_m^{left} s_m^{right}\right)},$$

wherein

$p_m$ represents the probability; $s_m^{left}$ represents the first vector, and $s_m^{right}$ represents the second vector; or $s_m^{right}$ represents the first vector, and $s_m^{left}$ represents the second vector; exp represents an exponential function based on e; and M is a positive integer and M represents a quantity of paths between the to-be-recommended item and items or item attributes in the history record of the user.

18. The method according to any one of claims 12 to 17, wherein the neural network is obtained by training the neural network by using a training sample as an input of the neural network and a loss function value less than a threshold as an objective, the training sample comprises a plurality of training paths, or the training sample comprises the knowledge graph for training, a first training identifier, and a second training identifier, and an item indicated by the first training identifier and an item or an item attribute indicated by the second training identifier are an item or an item attribute in a historical item of the user; and

the loss function comprises a first loss function, wherein the first loss function indicates a difference between the evaluation result output by the neural network and a target result, and the target result is related to the item or the item attribute in the history record of the user.

19. The method according to claim 18, wherein the loss function further comprises a second loss function, wherein the second loss function indicates a difference between an embedding vector of a first training vector and an embedding vector of a second training vector in the training path of the knowledge graph for training, and two ends of the training path corresponds to the item or the item attribute in the history record of the user.

20. The method according to claim 19, wherein the loss function further comprises a third loss function, and the third loss function indicates a difference between a computed embedding vector of the first entity and a real embedding vector of the first entity, and/or the third loss function indicates a difference between a computed embedding vector of the second entity and a real embedding vector of the second entity.

21. A recommendation apparatus, wherein the recommendation apparatus comprises:

an obtaining unit, configured to obtain a knowledge graph, wherein the knowledge graph comprises a plurality of first entities indicating an item and a plurality of second entities indicating an item attribute; and

a running unit, configured to run a neural network based on the knowledge graph and information of a user, to obtain a recommendation result, wherein the information of the user indicates an item or an item attribute in a history record of the user; the recommendation result comprises a recommended item; and the neural network is configured to perform computing based on at least one first direction and at least one second direction in the knowledge graph to obtain the recommendation result, wherein the first direction starts from a first entity indicating the recommended item or a to-be-recommended item, and the second direction starts from a first entity indicating the item in the history record of the user, or starts from a second entity indicating the item attribute in the history record of the user.

22. The recommendation apparatus according to claim 21, wherein the recommendation result further comprises an explanation for the recommended item, and the explanation is associated with one first direction and one second direction.

23. The recommendation apparatus according to claim 21, wherein

the running unit is specifically configured to extract a plurality of paths from the knowledge graph based on the knowledge graph and the information of the user, wherein each path indicates an association between entities at two ends of the path, one end of each path corresponds to the to-be-recommended item, and the other end of each path corresponds to the item or the item attribute in the history record of the user; and

the running unit is specifically configured to input the plurality of paths into the neural network to score a plurality of to-be-recommended items, so that the neural network obtains the recommendation result, wherein the neural network is configured to perform computing based on a first direction and a second direction of each of the plurality of paths to obtain the recommendation result; and for one path, the first direction is a direction in which one end of the path points to the other end of the path, and the second direction is a direction in which the other end of the path points to one end of the path.

24. The recommendation apparatus according to claim 21, wherein

the running unit is specifically configured to input the knowledge graph and the information of the user into the neural network;

the running unit is specifically configured to extract, by the neural network, a plurality of paths from the knowledge graph based on the knowledge graph and the information of the user, wherein each path indicates an association between entities at two ends of the path, one end of each path corresponds to the to-be-recommended item, and the other end of each path corresponds to the item or the item attribute in the history record of the user; and

the running unit is specifically configured to score a plurality of to-be-recommended items based on the first direction and the second direction of each of the plurality of paths, so that the neural network obtains the recommendation result, wherein for one path, the first direction is a direction in which one end of the path points to the other end of the path, and the second direction is a direction in which the other end of the path points to one end of the path.

25. The recommendation apparatus according to claim 24, wherein the first direction is consistent with a direction of a first vector; the second direction is consistent with a direction of a second vector; and for one path, the first vector is a vector pointing from the first entity that is in the path and that indicates the to-be-recommended item to an entity that is in the path and that is adjacent to the first entity indicating the to-be-recommended item, and the second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user; and

the running unit is specifically configured to score, for each of the plurality of paths, based on a probability that the first vector and the second vector of each path are aggregated at one entity in each path, the to-be-recommended item corresponding to each path, to obtain the recommended item.

26. The recommendation apparatus according to any one of claims 23 to 25, wherein the running unit is further configured to separately score the plurality of paths based on a first direction and a second direction of each of the plurality of paths, to obtain an explanation for the recommendation result, wherein the explanation is a description of associations between entities at two ends indicated by the one or more paths in the obtained recommendation result.

27. The recommendation apparatus according to claim 26, wherein the first direction is consistent with the direction of the first vector; the second direction is consistent with the direction of the second vector; and for one path, the first vector is the vector pointing from the first entity that is in the path and that indicates the to-be-recommended item to the entity that is in the path and that is adjacent to the first entity indicating the to-be-recommended item, and the second vector is the vector pointing from the first entity that is in the path and that indicates the item in the history record of the user to the entity that is in the path and that is adjacent to the first entity indicating the item in the history record of the user; or the second vector is the vector pointing from the second entity that is in the path and that indicates the item attribute in the history record of the user to the entity that is in the path and that is adjacent to the second entity indicating the item attribute in the history record of the user; and
the running unit is specifically configured to separately compute the probability that the first vector and the second vector of each path are aggregated at one entity comprised in each path, to obtain the explanation for the recommendation result.

28. The recommendation apparatus according to claim 27, wherein

the running unit is specifically configured to separately compute, by using the following formula, the probability that the first vector and the second vector of each path are aggregated at one entity comprised in each path:

$$p_m = \frac{\exp\left(s_m^{left} s_m^{right}\right)}{\sum_{m=1}^{M} \exp\left(s_m^{left} s_m^{right}\right)},$$

wherein

$p_m$ represents the probability; $s_m^{left}$ represents the first vector, and $s_m^{right}$ represents the second vector; or $s_m^{right}$ represents the first vector, and $s_m^{left}$ represents the second vector; exp represents an exponential function based on e; and M is a positive integer and M represents a quantity of paths between the to-be-recommended item and items or item attributes in the history record of the user.

29. A recommendation apparatus, wherein the recommendation apparatus comprises:

an obtaining unit, configured to obtain a knowledge graph, a first identifier, and a second identifier, wherein the knowledge graph comprises a plurality of first entities indicating an item and a plurality of second entities indicating an item attribute, the first identifier indicates a to-be-recommended item, the second identifier indicates an item or an item attribute in a history record of a user, and the knowledge graph comprises a first entity corresponding to the first identifier and a first entity or a second entity corresponding to the second identifier; and
a running unit, configured to run a neural network based on the knowledge graph, the first identifier, and the second identifier, to obtain an evaluation result, wherein the evaluation result comprises a probability that the to-be-recommended item is recommended; the neural network is configured to perform computing based on at least one first direction and at least one second direction in the knowledge graph, to obtain the evaluation result; and the first direction starts from the first entity corresponding to the first identifier, and the second direction starts from the first entity or the second entity corresponding to the second identifier.

30. The recommendation apparatus according to claim 29, wherein the evaluation result further comprises a probability corresponding to a path in the knowledge graph based when the to-be-recommended item is recommended, one end of the path is the first entity corresponding to the first identifier, and the other end of the path is the first entity corresponding to the second identifier.

31. The recommendation apparatus according to claim 29, wherein

the running unit is specifically configured to extract a plurality of paths from the knowledge graph based on the knowledge graph, the first identifier, and the second identifier, wherein each path indicates an association between entities at two ends of the path, one end of each path corresponds to the to-be-recommended item, and the other end of each path corresponds to the item or the item attribute in the history record of the user; and the running unit is specifically configured to input the plurality of paths into the neural network to score a plurality of to-be-recommended items, so that the neural network obtains the evaluation result, wherein the neural network is configured to perform computing based on the first direction and the second direction of each of the plurality of paths to obtain the probability; and for one path, the first direction is a direction in which one end of the path points to the other end of the path, and the second direction is a direction in which the other end of the path points to one end of the path.

32. The recommendation apparatus according to claim 30, wherein

the running unit is specifically configured to input the knowledge graph, the first identifier, and the second identifier into the neural network;
the running unit is specifically configured to extract, by the neural network based on the knowledge graph, the first identifier, and the second identifier, a plurality of paths from the knowledge graph, wherein each path indicates an association between entities at two ends of the path, one end of each path corresponds to the to-be-recommended item, and the other end of each path corresponds to the item or the item attribute in the history record of the user; and
the running unit is specifically configured to score, based on the first direction and the second direction of each of the plurality of paths, a plurality of to-be-recommended items corresponding to the plurality of paths, so that the neural network obtains the evaluation result, wherein for one path, the first direction is a direction in which one end of the path points to the other end of the path, and the second direction is a direction in which the other end of the path points to one end of the path.

33. The recommendation apparatus according to claim 32, wherein the first direction is consistent with a direction of a first vector; the second direction is consistent with a direction of a second vector; and for one path, the first vector is a vector pointing from the first entity that is in the path and that indicates the to-be-recommended item to an entity that is in the path and that is adjacent to the first entity indicating the to-be-recommended item, and the second vector is a vector pointing from the first entity that is in the path and that indicates the item in the history record of the user to an entity that is in the path and that is adjacent to the first entity indicating the item in the history record of the user; or the second vector is a vector pointing from the second entity that is in the path and that indicates the item attribute in the history record of the user to an entity that is in the path and that is adjacent to the second entity indicating the item attribute in the history record of the user; and
the running unit is specifically configured to separately compute the probability that the first vector and the second vector of each path are aggregated at one entity comprised in each path.

34. The recommendation apparatus according to claim 33, wherein

the running unit is specifically configured to separately compute, by using the following formula, the probability that the first vector and the second vector of each path are aggregated at one entity comprised in each path:

$$p_m = \frac{\exp\left(s_m^{left} s_m^{right}\right)}{\sum_{m=1}^{M} \exp\left(s_m^{left} s_m^{right}\right)},$$

wherein

$p_m$ represents the probability, $s_m^{left}$ represents the first vector, and $s_m^{right}$ represents the second vector, or $s_m^{right}$ represents the first vector, and $s_m^{left}$ represents the second vector; and exp represents an exponential function based on e, M is a positive integer, and M represents a quantity of paths between the to-be-recommended item and items or item attributes in the history record of the user.

35. A recommendation apparatus, comprising a processor, wherein the processor is coupled to a memory, the memory is configured to store a computer program or instructions, and the processor is configured to execute the computer program or the instructions in the memory, so that the method according to any one of claims 1 to 11 or the method according to any one of claims 12 to 20 is performed.

36. A chip, wherein the chip comprises a processor and a communication interface, the communication interface is coupled to the processor, and the processor is configured to run a computer program or instructions, so that the method according to any one of claims 1 to 11 or the method according to any one of claims 12 or 20 is performed.

37. A computer-readable storage medium, wherein the computer-readable storage medium stores instructions, and when the instructions are executed on a computer, the computer is enabled to perform the method according to any one of claims 1 to 11, or the computer is enabled to perform the method according to any one of claims 12 to 20.

38. A computer program product, wherein when the computer program product is run on a computer, the computer is enabled to perform the method according to any one of claims 1 to 11 or the computer is enabled to perform the method according to any one of claims 12 to 20.

100

| User application |
| --- |

Recommendation network architecture

| Propagation computing | Loss function |
| --- | --- |

| Knowledge graph |
| --- |

| New user data processing |
| --- |

| Data obtaining |
| --- |

| Data storage |
| --- |

FIG. 1

200

Server

Software

Recommendation network

Input data

Output a recommended item

Output an explanation

Hardware

Memory

Host memory or disk

FIG. 2

EP 4 258 132 A1

```
                                          300

┌──────────────┐
│Data collection│
│  device 360  │
└──────┬───────┘
       │
   Data flow
       │
       ▼
     ┌─────────────┐          ┌──────────────────┐
─────▶│ Database 330│─────────▶│ Training device 320│
      └─────────────┘          └──────────────────┘
```

Data flow

```
┌──────────┐                ┌─────────────────────────────────────────┐
│          │                │                    Execution device 310  │
│          │                │  ┌────────┐  ┌──────────────────────────┐│
│          │  Input         │  │        │  │ ┌──────────────────────┐ ││
│ Customer │  data          │  │  I/O   │  │ │  Target model/rule   │ ││
│ device   │───────────────▶│  │interface│ │ │        301           │ ││
│  340     │                │  │  312   │  │ └──────────────────────┘ ││
│          │  Output        │  │        │  │     Computing module 311 ││
│          │  data          │  │        │  └──────────────────────────┘│
│          │◀───────────────│  │        │  ┌──────────────────────┐    │
└──────────┘                │  └────────┘  │Preprocessing module 313│   │
                            └─────────────────────────────────────────┘
```

Data storage system 350

FIG. 3

FIG. 4

EP 4 258 132 A1

```
┌─────────────────────────────────────────────────────┐ ⌐── 501
│              Obtain a training sample                │
└─────────────────────────────────────────────────────┘
                          │
                          ▼
┌─────────────────────────────────────────────────────┐ ⌐── 502
│  Train a recommendation network by using the training│
│  sample as an input of the recommendation network and a│
│     loss function value less than a first threshold as an│
│   objective, to obtain the trained recommendation network│
└─────────────────────────────────────────────────────┘
```

FIG. 5

FIG. 6

$e_1$

Stephen Chow Sing-Chi

$R_{1st}$

Leading actor

$R_{end}$

Leading actor

v

Sixty Million Dollar Man

Leading
actor

$e_2$

Wu Mengda

Leading
actor

$i_1$

Tricky Brains

$R_{1st}$

$R_{end}$

Recommended movie

Genre
$R_{1st}$

$e_3$

Comedy

Genre
$R_{end}$

FIG. 7

```
                                                              ┌── 801
┌──────────────────────────────────────────────┐╱
│          Obtain a knowledge graph              │
└──────────────────────────────────────────────┘
                        │
                        ▼
                                                              ┌── 802
┌──────────────────────────────────────────────┐╱
│ Run a recommendation network based on the knowledge │
│   graph and information of a user, to obtain a      │
│            recommendation result                    │
└──────────────────────────────────────────────┘
```

FIG. 8

Compute a first vector and a second vector of a path in a knowledge graph — 8021

Separately compute a probability that the first vector and the second vector of each path are aggregated at one entity included in each path — 8022

Determine a feedback embedding vector of a user based on the probability and an embedding vector corresponding to an intermediate entity — 8023

Compute a distance between an embedding vector corresponding to a to-be-recommended item and the feedback embedding vector, to obtain a score of the to-be-recommended item — 8024

Determine a recommended item based on the score of the to-be-recommended item — 8025

Obtain an explanation for the recommended item or the to-be-recommended item based on the probability — 8026

Evaluate accuracy of the recommended item based on the score — 8027

Evaluate accuracy of the explanation based on the probability and the knowledge graph — 8028

FIG. 9

Historical viewing record
(First historical entity)

Hong Kong movie — Genre

Genre

Days of Being Wild

Leading actor

Zhang Guorong

Leading
actor

To-be-recommended movie
(First recommendation entity)

Farewell My Concubine

Genre — History — Genre — White Vengeance

User A

Director

Chen Kaige — Director

Forever Enthralled

Type

Beijing opera — Type

FIG. 10

FIG. 11

EP 4 258 132 A1

FIG. 12

FIG. 13

1400

Recommendation apparatus

1401

Obtaining unit

1402

Running unit

FIG. 14

1500

Recommendation apparatus

1501

Obtaining unit

1502

Running unit

FIG. 15

1600

Recommendation apparatus

1602

Communication port

1601

Processor

1604

1603

Memory

FIG. 16

## INTERNATIONAL SEARCH REPORT

| | International application No. |
|---|---|
| | **PCT/CN2021/141472** |

**A.   CLASSIFICATION OF SUBJECT MATTER**

G06F 16/9535(2019.01)i;   G06N 3/04(2006.01)i

According to International Patent Classification (IPC) or to both national classification and IPC

**B.   FIELDS SEARCHED**

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

WPI, EPODOC, CNKI, CNPAT, IEEE, GOOGLE: 知识图谱, 推荐, 实体, 属性, 神经, 网络, 方向, 历史, 标识, knowledge, graph, recommend, entity, attribute, neural, network, direction, history, identity

**C.   DOCUMENTS CONSIDERED TO BE RELEVANT**

| Category* | Citation of document, with indication, where appropriate, of the relevant passages | Relevant to claim No. |
|---|---|---|
| A | CN 112131472 A (TENCENT TECHNOLOGY SHENZHEN CO., LTD.) 25 December 2020 (2020-12-25)<br>        description paragraphs 66-113 | 1-38 |
| A | CN 110909174 A (NANJING UNIVERSITY OF AERONAUTICS AND ASTRONAUTICS) 24 March 2020 (2020-03-24)<br>        entire document | 1-38 |
| A | CN 112148885 A (SHANGHAI MOLE COMPUTER TECHNOLOGY CO., LTD.) 29 December 2020 (2020-12-29)<br>        entire document | 1-38 |
| A | US 2020110746 A1 (ACCENTURE GLOBAL SOLUTIONS LIMITED) 09 April 2020 (2020-04-09)<br>        entire document | 1-38 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2022** | **28 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141472**

| Patent document cited in search report | | | Publication date (day/month/year) | Patent family member(s) | Publication date (day/month/year) |
|---|---|---|---|---|---|
| CN | 112131472 | A | 25 December 2020 | None | |
| CN | 110909174 | A | 24 March 2020 | None | |
| CN | 112148885 | A | 29 December 2020 | None | |
| US | 2020110746 | A1 | 09 April 2020 | None | |

Form PCT/ISA/210 (patent family annex) (January 2015)

**REFERENCES CITED IN THE DESCRIPTION**

**Patent documents cited in the description**

- CN 202011640574